# EUROPEAN PATENT APPLICATION

(11) **EP 4 588 787 A1**
(43) Date of publication of application: **23.07.2025**
(21) Application number: 23825189.6
(22) Date of filing: 29.08.2023
(51) Int. Cl.: B63H 21/38, B63B 17/00, B63B 25/16, F02D 19/06, F02D 41/00, F02D 19/02

(54) **GAS PURGING SYSTEM FOR SHIP**

(30) Priority: 16.09.2022 KR 20220117061
(71) Applicant: Hanwha Ocean Co., Ltd., Geoje-si, Gyeongsangnam-do 53302 (KR)
(72) Inventor: KIM, Jong Hyun, Geoje-si Gyeongsangnam-do 53300 (KR); SEO, Min Su, Busan 48274 (KR)
(74) Representative: Cabinet Beau de Loménie
(86) International application number: PCT/KR2023/012772
(87) International publication number: WO 2024/058463

(57) **Abstract**

Disclosed herein is a gas purging system for ships having an engine fueled by fuel gas. The gas purging system includes: a fuel supply line along which fuel gas is supplied to the engine; a gas valve unit disposed on the fuel supply line to control a pressure of the fuel gas; and a purge line along which nitrogen gas is supplied to the engine to purge an interior of the engine and an interior of the fuel supply line, wherein the nitrogen gas is directly supplied to the engine along the purge line, purges the interior of the engine and the fuel supply line, and is discharged to outside atmosphere through the gas valve unit.

## Description

### [Technical Field]

The present invention relates to a gas purging system for ships. More particularly, the present invention relates to a gas purging system for ships, which is designed such that pipes for discharging residual gas upon purging of an engine system fueled by a liquefied gas such as LNG are minimally placed in an engine room, thereby maximizing safety from the danger of explosion.

### [Background Art]

In general, combustion devices, such as engines installed on various ships, are fueled by oils, such as marine diesel oil (MDO) and heavy fuel oil (HFO). However, these fuel oils are considered to be the main culprits of environmental pollution due to greenhouse gases and various harmful substances generated during combustion thereof. In addition, if the price of the oils increases due to factors, such as depletion of fossil fuels or international political instability, fuel costs will skyrocket, causing problems in ship operation.

In recent years, as air pollution regulations have been gradually tightened, cleaner fuels such as liquefied natural gas (LNG), which contains low levels of sulfur oxide (Soₓ) and nitrogen oxide (NOₓ), have been attracting attention as an energy source to replace fuel oil. In particular, LNG carriers (LNGCs) that transport LNG in large quantities have already used technology to use LNG stored in a storage tank as fuel for engines.

Moreover, in recent years, the use of LNG fuel has been gradually extended to ships other than LNGCs, and, in particular, is being considered for very large crude-oil carriers (VLCCs) and container ships. Unlike LNGCs that directly carry LNG as cargo and use it as fuel, general ships need to have a separate LNG fuel tank to use LNG as fuel and there are also LNG fueled ships (LFS) that operate with a separate LNG fuel tank.

Recent development in technology has led to the development and use of dual fuel engines (DF engines) that can be fueled by both fuel oil and fuel gas. DF engines are eco-friendly engines that can dramatically reduce fuel consumption, carbon emissions, and operating costs, and are a kind of hybrid concept engine that uses both heavy fuel oil (HFO) and natural gas as fuel.

For example, an ME-GI engine is a two-stroke high-pressure gas injection engine that can use both heavy fuel oil and natural gas as fuel, and is being promoted as a next-generation eco-friendly engine that can reduce pollutant emissions by at least 23% for carbon dioxide, at least 80% for nitrogen oxides, and at least 95% for sulfur compounds compared to a diesel engine of the same power.

For such an engine that is fueled by fuel gas, when an engine system is not operating for a long time, when the engine system is to be maintained, or when fuel for the engine is to be changed from fuel gas to fuel oil, there is a risk of explosion if fuel gas is not removed and remains in the system. Accordingly, it is necessary to remove the remaining fuel gas from the engine system, including a piping system through which fuel gas is supplied to the engine, for the safety of the system.

In a conventional dual fuel engine system, when an engine is running on fuel gas, a supply valve is open, a purge valve and an exhaust valve are closed, and the opening degree of a pressure regulating valve is adjusted according to the load of the engine to supply fuel gas at a pressure required for the engine.

Accordingly, a ship having an engine fueled by fuel gas should be provided with a gas purging system to purge discharge fuel gas remaining in the engine system.

Generally, the gas purging system is configured to push the residual fuel gas out of the engine system using an inert gas, such as nitrogen (N₂).

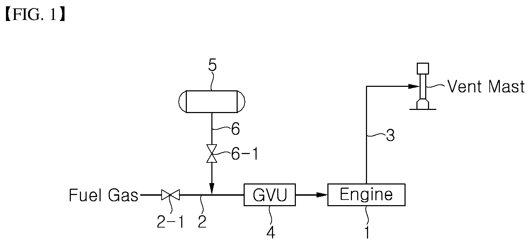

FIG. 1 is a schematic diagram of a conventional gas purging system for ships.

Referring to FIG. 1, an engine 1 fueled by fuel gas is connected to a fuel supply line 2 along which fuel gas is supplied from a fuel storage tank (not shown) to the engine 1 and an exhaust line 3 along which exhaust gas is discharged from the engine 1. The fuel supply line 2 is provided with a gas valve unit (GVU) 4 to control the pressure and flow rate of the fuel gas supplied to the engine 1.

In addition, the fuel supply line 2 is connected to a purge line 6 along which nitrogen gas supplied from a nitrogen buffer tank 5 to purge the interior of an engine system is injected into the fuel supply line 2.

The conventional gas purging system for ships may be configured to purge the interior of the fuel supply line 2 and the interior of the engine 1 using nitrogen gas supplied from the nitrogen buffer tank 5.

Specifically, when the operation of purging the engine system is started, a fuel supply valve 2-1 disposed on the fuel supply line 2 is closed and a purge valve 6-1 disposed on the purge line 6 is opened such that nitrogen stored in the nitrogen buffer tank 5 is injected in a gaseous state into the fuel supply line 2.

The nitrogen gas injected into the fuel supply line 2 is supplied to the engine 1 through the gas valve unit 4, and fuel gas remaining in the engine system is pushed out of the engine system by the nitrogen gas and then discharged to a safe area (for example, outside atmosphere) through the exhaust line 3. As such, in the conventional gas purging system for ships, purging with nitrogen gas is performed in the sequence of gas valve unit 4 → engine 1 → safe area.

However, such a conventional gas purging system has a problem in that there is a risk that the exhaust line 3 along which the residual gas is purged from the engine system will be placed in an engine room, which also leads to increase in material quantity per yard since a vent pipe placed in the engine room, which is classified as a gas safe zone, should be formed of a double-walled pipe or ducted pipe.

### [Disclosure]

### [Technical Problem]

It is one object to the present invention to provide a gas purging system for ships, which is designed such that pipes for discharging residual gas upon purging of an engine system fueled by a liquefied gas such as LNG are minimally placed in an engine room, thereby ensuring safety from the danger of explosion.

It is another object of the present invention to provide a gas purging system for ships, which can simplify logic for backflow prevention control by combining valves installed to prevent backflow of vaporized LNG into a single valve set, thereby improving space utilization in a ship while providing cost savings.

It is a further object of the present invention to provide a backflow prevention valve set for a gas purging system, which can ensure more reliable prevention of backflow of vaporized LNG from an engine.

It is yet another object of the present invention to provide a backflow prevention valve set for a gas purging system, in which valves installed to prevent backflow of vaporized LNG are combined into a single valve set to simplify logic for backflow prevention control, thereby improving space utilization in a ship while providing cost savings.

It is yet another object of the present invention to provide a nitrogen supply system for dual fuel engines, which can ensure rapid purging of the engine, and a method of controlling the same.

It is yet another object of the present invention to provide a nitrogen supply system for dual fuel engines, which can prevent backflow of fuel gas, and a method of controlling the same.

The present invention is not limited thereto and other objects of the present invention will become apparent to those skilled in the art from the following description in conjunction with the accompanying drawings.

### [Technical Solution]

In accordance with one aspect of the present invention, a gas purging system for ships having an engine fueled by fuel gas includes: a fuel supply line along which fuel gas is supplied to the engine; a gas valve unit disposed on the fuel supply line to control a pressure of the fuel gas; and a purge line along which nitrogen gas is supplied to the engine to purge an interior of the engine and an interior of the fuel supply line, wherein the nitrogen gas is directly supplied to the engine along the purge line, purges the interior of the engine and the fuel supply line, and is discharged to outside atmosphere through the gas valve unit.

The gas purging system may further include: a buffer tank storing nitrogen gas to be delivered to the purge line.

The gas valve unit may be placed in an area classified as a gas hazardous zone.

The gas hazardous zone may be periodically ventilated and may be a gas valve unit room (GVU Room) or a cargo compressor room.

The gas valve unit may be connected to a vent line along which residual gas pushed out of the engine by the nitrogen gas is discharged to outside atmosphere, wherein the vent line may be provided with a purge valve to open/close the vent line.

The purge line may be provided with a backflow prevention valve set to prevent backflow of the fuel gas from the engine, wherein the backflow prevention valve set may be placed in the gas hazardous zone.

The backflow prevention valve set may include: a first shutoff valve, a second shutoff valve, and a check valve disposed sequentially from an upstream side of the purge line; and a bleed valve disposed on a leaked gas discharge line branched off of the purge line between the first shutoff valve and the second shutoff valve to discharge leaked gas to outside atmosphere therethrough, wherein the first shutoff valve and the second shutoff valve may be switchable between an open position and a closed position to double open or close an internal channel of the purge line, the check valve may permit one-way flow of a fluid inside the purge line to prevent backflow of the fuel gas from the engine into the purge line, and the bleed valve may function to release residual pressure from the purge line between the first shutoff valve and the second shutoff valve when the first shutoff valve and the second shutoff valve are closed.

The first shutoff valve and the second shutoff valve may always be switched to the same position with respect to each other, and the bleed valve may always be switched to an opposite position with respect to the first shutoff valve and the second shutoff valve.

The backflow prevention valve set may further include: an actuator opening/closing the first shutoff valve, the second shutoff valve, and the bleed valve; a tubing line along which a working fluid is supplied to drive the actuator; and a solenoid valve unit being a group of solenoid valves disposed on the tubing line, wherein the backflow prevention valve set may be placed in the gas valve unit room, the solenoid valve unit may be placed in the engine room at a location proximate to a wall separating the engine room from the gas valve unit room, and the tubing line may extend from the engine room into the gas valve unit through the wall.

The engine may include a high-pressure gas injection engine powered by fuel gas compressed to 10 bar or more and a low-pressure gas injection engine powered by fuel gas compressed to less than 10 bar, the gas valve unit may include a high-pressure gas valve unit supplying fuel gas to the high-pressure gas injection engine and a low-pressure gas valve unit supplying fuel gas to the low-pressure gas injection engine, and the purge line may include a purge line connected from the buffer tank to the high-pressure gas injection engine and a purge line connected from the buffer tank to the low-pressure gas injection engine.

The backflow prevention valve set may be disposed on each of the purge line connected to the high-pressure gas injection engine and the purge line connected to the low-pressure gas injection engine.

The high-pressure gas valve unit may be placed in the cargo compressor room, and the low-pressure gas valve unit and the backflow prevention valve set may be placed in the gas valve unit room.

In accordance with a further aspect of the present invention, a gas purging system for ships having an engine fueled by fuel gas includes: a storage tank storing fuel gas used as fuel for the engine in a liquefied state; a fuel supply line along which the fuel gas is supplied from the storage tank to the engine; a gas valve unit disposed on the fuel supply line to control a pressure of the fuel gas; a buffer tank storing an inert gas used to purge the engine; and a purge line connected from the buffer tank to the engine, wherein, during operation of the engine using the fuel gas, liquefied gas stored in the buffer tank is supplied to the engine along the fuel supply line and, upon purging of the engine, the inert gas stored in the buffer tank is supplied to the engine to push residual gas out of the engine and the residual gas pushed out of the engine by the inert gas is discharged to the fuel supply line to be vented to a safe area through the gas valve unit disposed on the fuel supply line.

A direction in which the fuel gas is supplied from the storage tank to the engine may be reversed with respect to a direction in which the residual gas is discharged upon purging of the engine.

In accordance with yet another aspect of the present invention, a backflow prevention valve set for a gas purging system disposed on a purge line, along which an inert gas is supplied to purge a gas pipe, includes: a single body; a first channel formed inside the single body and providing a passage for the inert gas to enter and exit the single body; a second channel branched off of the first channel between the first shutoff valve and the second shutoff valve to discharge leaked gas therethrough; a first shutoff valve and a second shutoff valve disposed sequentially from an upstream side of the first channel to double open or close the first channel; a check valve disposed in the first channel downstream of the second shutoff valve to permit one-way flow of the inert gas in the first channel; and a bleed valve disposed in the second channel to release residual pressure from the first channel between the first shutoff valve and the second shutoff valve when the first shutoff valve and the second shutoff valve are closed, wherein the first shutoff valve, the second shutoff valve, the check valve, and the bleed valve are integrated into a single valve assembly through the single body.

The single body may be formed with an inert gas inlet through which the inert gas enters the first channel, an inert gas outlet through which the inert gas exits the first channel, and a leakage gas outlet through which leaked gas exits the second channel.

The backflow prevention valve set may further include: a filter disposed on a most upstream side of the first channel to filter out foreign matter contained in the inert gas; and a pressure sensor disposed in the first channel between the filter and the first shutoff valve to measure a pressure of the inert gas at the corresponding location.

The first shutoff valve, the second shutoff valve, and the bleed valve may be switchable between an open position and a closed position, the first shutoff valve and the second shutoff valve may be always switched to the same position with respect to each other, and the bleed valve may be always switched to an opposite position with respect to the first shutoff valve and the second shutoff valve.

The check valve may be configured as a closable check valve to be shut off for maintenance work.

The backflow prevention valve set may further include: a sub-check valve disposed in the first channel between the first shutoff valve and a point at which the second channel is branched off of the first channel to permit one-way flow of the inert gas in the first channel.

The sub-check valve may be configured as a closable check valve to be shut off for maintenance work.

In accordance with yet another aspect of the present invention, a gas purging system for ships having an engine fueled by fuel gas includes: a purge line along which an inert gas is supplied to the engine to purge an interior of the engine; and a backflow prevention valve set disposed on the purge line to prevent fuel gas from flowing back from the engine, wherein the backflow prevention valve set is configured as a valve assembly including: a first shutoff valve and a second shutoff valve disposed sequentially from an upstream side of the purge line to double open or close an internal channel of the purge line; a check valve disposed on the purge line downstream of the second shutoff valve; and a bleed valve disposed on a leaked gas discharge line branched off of the purge line between the first shutoff valve and the second shutoff valve to discharge a gas leaked from the second shutoff valve therethrough.

The gas purging system may further include: an orifice disposed on the purge line downstream of the backflow prevention valve set; and a differential pressure transmitter measuring a differential pressure across the orifice, wherein, when the differential pressure across the orifice is greater than or equal to a predetermined value, an alarm may be triggered to trip the engine or change fuel for the engine from the fuel gas to fuel oil based on determination that there is backflow from the engine into the purge line.

In accordance with yet another aspect of the present invention, a gas purging system for ships includes: a high-pressure gas injection engine powered by liquefied gas; a low-pressure gas injection engine powered by liquefied gas at a lower pressure than that supplied to the high-pressure gas injection engine; a first fuel supply line along which liquefied gas stored in a liquefied gas storage tank is supplied to the high-pressure gas injection engine, the liquefied gas being compressed and vaporized while passing through the first fuel supply line; a second fuel supply line along which liquefied gas stored in the liquefied gas storage tank is supplied to the low-pressure gas injection engine, the liquefied gas being compressed and vaporized while passing through the second fuel supply line; a first purge line along which an inert gas is supplied to the high-pressure gas injection engine to purge an interior of the high-pressure gas injection engine and the first fuel supply line; and a second purge line along which an inert gas is supplied to the low-pressure gas injection engine to purge an interior of the low-pressure gas injection engine and the second fuel supply line, wherein the inert gas is directly supplied to the high-pressure gas injection engine and the low-pressure gas injection engine along the first purge line and the second purge line, respectively, wherein purging of the high-pressure gas injection engine is performed in a direction from the interior of the high-pressure gas injection engine to the first fuel supply line and purging of the low-pressure gas injection engine is performed in a direction from the interior of the low-pressure gas injection engine to the second fuel supply line.

Residual gas pushed out of the high-pressure gas injection engine by the inert gas supplied to the high-pressure gas injection engine along the first purge line may be vented to outside atmosphere through a high-pressure gas valve unit disposed on the first fuel supply line, and residual gas pushed out of the low-pressure gas injection engine by the inert gas supplied to the low-pressure gas injection engine along the second purge line may be vented to outside atmosphere through a low-pressure gas valve unit disposed on the second fuel supply line.

The high-pressure gas valve unit may serve to control the pressure and flow rate of fuel gas supplied to the high-pressure gas injection engine and may be placed in a cargo compressor room or a gas valve unit room (GVU Room) classified as a gas hazardous zone, and the low-pressure gas valve unit may serve to control the pressure and flow rate of fuel gas supplied to the low-pressure gas injection engine and may be placed in the gas valve unit room.

A section of the first fuel supply line extending from the cargo compressor room or gas valve unit room having the high-pressure gas valve unit placed therein to the high-pressure gas injection engine may be formed of a double-walled pipe; and a section of the second fuel supply line extending from the gas valve unit room having the low-pressure gas valve unit placed therein to the low-pressure gas injection engine may be formed of a double-walled pipe.

The gas purging system may further include: a first backflow prevention valve set disposed on the first purge line to prevent fuel gas from flowing back from the high-pressure gas injection engine; and a second backflow prevention valve set disposed on the second purge line to prevent fuel gas from flowing back from the low-pressure gas injection engine.

The gas purging system may further include: a third purge line branched off of the first purge line downstream of the first backflow prevention valve set and connected to the second fuel supply line, wherein the second fuel supply line may be provided with a master valve controlling fuel gas supply to the low-pressure gas injection engine, and an inert gas supplied along the third purge line may purge an interior of the second fuel supply line extending from downstream of the master valve to a point at which the low-pressure gas valve unit is disposed.

The first backflow prevention valve set may include: a first channel defining a passage for an inert gas to flow through; a first shutoff valve and a second shutoff valve disposed sequentially in the first channel to open/close the first channel; a check valve disposed in the first channel downstream of the second shutoff valve; a second channel branched off of the first channel between the first shutoff valve and the second shutoff valve to discharge leaked gas therethrough; and a bleed valve disposed in the second channel.

During gas mode operation of the high-pressure gas injection engine, the first shutoff valve and the second shutoff valve may be closed and the bleed valve may be opened and, upon purging of the high-pressure gas injection engine, the first shutoff valve and the second shutoff valve may be opened and the bleed valve may be closed.

The gas purging system may further include: a nitrogen supply valve and a check valve disposed sequentially on the second purge line between the second backflow prevention valve set and the low-pressure gas injection engine.

During gas mode operation of the low-pressure gas injection engine, the second backflow prevention valve set may be controlled to open the second purge line such that the second purge line is pressurized to a required inert gas supply pressure up to a point at which the nitrogen supply valve is disposed.

The gas purging system may further include: a first pressure sensor disposed upstream of the nitrogen supply valve, wherein, when an inert gas supply pressure measured by the first pressure sensor drops to a predetermined value or less, gas mode operation of the low-pressure gas injection engine may be stopped.

The gas purging system may further include: a second pressure sensor disposed between the nitrogen supply valve and the check valve, wherein, when the second pressure sensor detects pressure rise in the event of backflow from the low-pressure gas injection engine, gas mode operation of the low-pressure gas injection engine may be stopped.

The second backflow prevention valve set may include: a first channel defining a passage for an inert gas to flow through; a first shutoff valve and a second shutoff valve disposed sequentially in the first channel to open/close the first channel; a check valve disposed in the first channel downstream of the second shutoff valve; a second channel branched off of the first channel between the first shutoff valve and the second shutoff valve to discharge leaked gas therethrough; and a bleed valve disposed in the second channel.

During gas mode operation of the low-pressure gas injection engine, the first shutoff valve and the second shutoff valve may be opened and the nitrogen supply valve and the bleed valve may be closed and, when gas mode operation of the low-pressure gas injection engine is stopped, the first shutoff valve and the second shutoff valve may be closed and the bleed valve may be opened.

Upon purging of the low-pressure gas injection engine, the first shutoff valve, the second shutoff valve, and the nitrogen supply valve may be opened and the bleed valve may be closed.

The gas purging system may further include: at least one actuator controlling opening/closing of the first shutoff valve, the second shutoff valve, and the bleed valve; a solenoid valve group supplying a working fluid to drive the actuator; a tubing line along which the working fluid is supplied from the solenoid valve group to the actuator; and a solenoid valve disposed on the tubing line to control a pressure of the working fluid.

The tubing line may be provided in number corresponding to the number of actuators and the solenoid valve may be single in number and may be disposed on a common line from which a plurality of tubing lines extends.

The first shutoff valve, the second shutoff valve, the check valve, the bleed valve, and the solenoid valve may be incorporated into one body to be manufactured as a single assembly.

In accordance with yet another aspect of the present invention, a nitrogen supply system for dual fuel engines includes: an engine unit capable of operating on fuel gas and configured as an engine for propulsion of a ship; a fuel supply system supplying the fuel gas depending on a condition of the engine unit; a low-pressure gas valve unit controlling the pressure and flow rate of the fuel gas supplied to the engine unit; a nitrogen supply unit supplying nitrogen gas to purge an interior of the engine unit; and a ventilation unit discharging residual gas in the engine unit to a safe area in conjunction with supply of nitrogen.

The fuel supply system and the engine unit may be connected to each other via a main fuel supply line, wherein the main fuel supply line may be branched into a first fuel supply line and a second fuel supply line within a gas valve unit room.

The low-pressure gas valve unit may be disposed on the main fuel supply line and may include a first low-pressure gas valve unit disposed on the first fuel supply line and a second low-pressure gas valve unit disposed on the second fuel supply line, the first low pressure gas valve unit and the second low-pressure gas valve unit being placed in the gas valve unit room.

The low-pressure gas valve unit may include a first pipe purge valve, a second pipe purge valve, an engine purge valve, a pressure regulating valve, a first shutoff valve, and a second shutoff valve, wherein the first pipe purge valve may be disposed between the pressure regulating valve and the first shutoff valve, the second pipe purge valve may be disposed between the first shutoff valve and the second shutoff valve, and the engine purge valve may be disposed downstream of the second shutoff valve.

The nitrogen supply unit may further include a nitrogen supply regulation unit regulating nitrogen supply to the engine unit, wherein the nitrogen supply regulation unit may be connected to the nitrogen supply unit via a first nitrogen supply line and may be placed in a gas valve unit room (GVU room) and the engine unit may be connected to the nitrogen supply regulation unit via a second nitrogen supply line.

The nitrogen supply regulation unit may include: a first nitrogen shutoff valve and a second nitrogen shutoff valve shutting off nitrogen supply upon detection of leakage in the second nitrogen supply line; a first nitrogen supply valve regulating nitrogen supply to the engine unit; and a first backflow prevention valve discharging the fuel gas to an outside and preventing backflow of the fuel gas into the second nitrogen supply line.

The engine unit may include: a second nitrogen supply valve disposed on the second nitrogen supply line and switched to an open position in response to a signal indicating a need for nitrogen supply into the engine unit; a first pressure sensor disposed upstream of the second nitrogen supply valve; a second backflow prevention valve preventing backflow of the fuel gas into the second nitrogen supply line; and a second pressure sensor disposed between the second nitrogen supply valve and the second backflow prevention valve.

In accordance with yet another aspect of the present invention, a method of controlling a nitrogen supply system for dual fuel engines includes the steps of: controlling supply of fuel gas from a fuel gas supply system to an engine unit; and controlling opening/closing of a nitrogen supply regulation unit in conjunction with supply of the fuel gas, wherein the step of controlling opening/closing of a nitrogen supply regulation unit comprises the steps of: opening the nitrogen supply regulation unit; and closing the nitrogen supply regulation unit.

The step of opening the nitrogen supply regulation unit may include: supplying the fuel gas and nitrogen gas by opening a first nitrogen shutoff valve, a second nitrogen shutoff valve and a first nitrogen supply valve of the nitrogen supply regulation unit, and closing a first backflow prevention valve and a second nitrogen supply valve of the nitrogen supply regulation unit.

The step of opening the nitrogen supply regulation unit may further include: a pressure measurement step, and, when a second pressure sensor detects pressure rise, supply of the fuel gas may be shut off based on determination that there is backflow of the fuel gas, and the fuel gas may be discharged to a safe area by closing the first nitrogen shutoff valve and the second nitrogen shutoff valve and opening the first backflow prevention valve and the second nitrogen supply valve.

The step of opening the nitrogen supply regulation unit may further include: a nitrogen purging step in which supply of the fuel gas is shut off, followed by nitrogen purging, and the nitrogen purging step may include purging the engine unit, a first fuel supply line, and a second fuel supply line by opening a second nitrogen supply valve, a second shutoff valve and an engine purge valve, and closing a first shutoff valve.

The nitrogen purging step may further include purging the engine unit, the first fuel supply line, and the second fuel supply line by opening the second nitrogen supply valve, the second shutoff valve, a first pipe purge valve and a second pipe purge valve, and closing a first shutoff valve and the engine purge valve.

The step of closing the nitrogen supply regulation unit may include shutting off nitrogen supply by closing the nitrogen supply regulation unit when a pressure measured by a second pressure sensor is higher than a pressure measured by a first pressure sensor or when a pressure of a nitrogen supply unit is less than or equal to 5 bar.

### [Advantageous Effects]

The present invention provides a gas purging system that is designed to such that pipes for discharging residual gas upon purging of an engine system fueled by liquefied gas such as LNG are minimally placed in an engine room, thereby maximizing safety from the danger of explosion while significantly increasing productivity in shipbuilding through reduction in material quantity per yard.

The present invention provides a gas purging system that can simplify logic for backflow prevention control by combining valves installed to prevent backflow of vaporized LNG into a single valve set, thereby improving space utilization in a ship while providing cost savings.

The present invention provides a gas purging system that can ensure more reliable operation of an engine system and the gas purging system through installation of an orifice and a differential pressure transmitter on a system for prevention of backflow of vaporized LNG.

The present invention provides a gas purging system that can maximize safety by reducing the number of gas pipes placed in the engine room through change of the sequence of purging residual gas remaining in an engine system fueled by liquefied gas such as LNG.

The present invention provides a nitrogen supply system for dual fuel engines and a method of controlling the same.

The present invention provides a nitrogen supply system for dual fuel engines, which can rapidly purge an engine unit using nitrogen in a pressurized state, and a method of controlling the same.

The present invention provides a nitrogen supply system for dual fuel engines, which can prevent backflow of fuel gas, and a method of controlling the same.

The nitrogen supply system according to the present invention uses one nitrogen supply regulation unit for multiple engines, thereby reducing the volume the system occupies in a ship.

The nitrogen supply system according to the present invention supplies nitrogen gas directly to the engine unit such that residual gas in the engine unit is discharged through a low pressure gas valve unit, thereby eliminating the need to install a separate vent pipe within an engine room thus reducing the material quantity per yard as compared to a conventional nitrogen supply system.

The nitrogen supply system according to the present invention is designed such that pipes for purging and discharging residual gas from an engine unit can be placed in a gas valve unit room (GVU room), thereby significantly reducing the number of gas pipes in the engine room thus ensuring maximized safety.

The present invention is not limited thereto and other advantages of the present invention will become apparent to those skilled in the art from the following description in conjunction with the accompanying drawings.

### [Description of Drawings]

FIG. 1 is a schematic diagram of a conventional gas purging system for ships.
FIG. 2 is a schematic diagram of a gas purging system for ships according to the present invention.
FIG. 3 is a piping diagram of a portion of the gas purging system for ships according to the present invention, at which a backflow prevention valve is disposed.
FIG. 4 is a diagram of a first embodiment of the backflow prevention valve set according to the present invention.
FIG. 5 is a diagram of a second embodiment of the backflow prevention valve set according to the present invention.
FIG. 6 is a detailed internal piping diagram of a backflow prevention valve set according to the present invention.
FIG. 7 is an exterior view of a backflow prevention valve set according to the present invention.
FIG. 8 is a bottom view of the backflow prevention valve set of FIG. 7.
FIG. 9 is a schematic diagram of a backflow prevention valve set according to the present invention.
FIG. 10 is a front view of a backflow prevention valve set according to the present invention.
FIG. 11 is a side view of a backflow prevention valve set according to the present invention.
FIG. 12 is a bottom view of a backflow prevention valve set according to the present invention.
FIG. 13 is a block diagram of a nitrogen supply system for dual fuel engines according to one embodiment of the present invention.

### [Mode for Invention]

The above and other aspects, features, and advantages of the present invention will become apparent from the detailed description of the following embodiments in conjunction with the accompanying drawings.

The terminology used herein is for the purpose of describing particular embodiments and is not intended to be limiting. As used herein, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. Further, it will be understood that, when an element is referred to as being "on" or "connected to" another element, it may be directly on or connected to the other element or layer or intervening elements may be present.

As used herein, the term "liquefied gas" may refer to any type of liquefied gas that can be stored and transported in a liquid state by liquefaction at cryogenic temperatures and can be supplied in a gaseous state as fuel for an engine, such as liquefied natural gas (LNG), liquefied petroleum gas (LPG), liquefied ethane gas (LEG), liquefied ethylene gas, and liquefied propylene gas. In the following embodiments, the present invention will be described using LPG, which is a typical liquefied gas, as an example for convenience of description.

As used herein, the term "ship" may refer to any type of ship that can use liquefied gas as fuel for a propulsion engine. For example, the ship may include self-propelled vessels, such as an LNG fueled ship (LFS) that is propelled by LNG and an LNG carrier (LNGC) that uses LNG stored in a storage tank or boil-off gas generated in the storage tank as fuel for an engine, and floating offshore structures, such as an LNG floating production storage offloading (FPSO) unit and an LNG floating storage regasification unit (FSRU).

Hereinafter, exemplary embodiments of the present invention will be described in detail with reference to the accompanying drawings. It should be understood that the embodiments are provided for complete disclosure and thorough understanding of the present invention by those skilled in the art and that the present invention is not limited to the following embodiments and may be embodied in different ways by those skilled in the art.

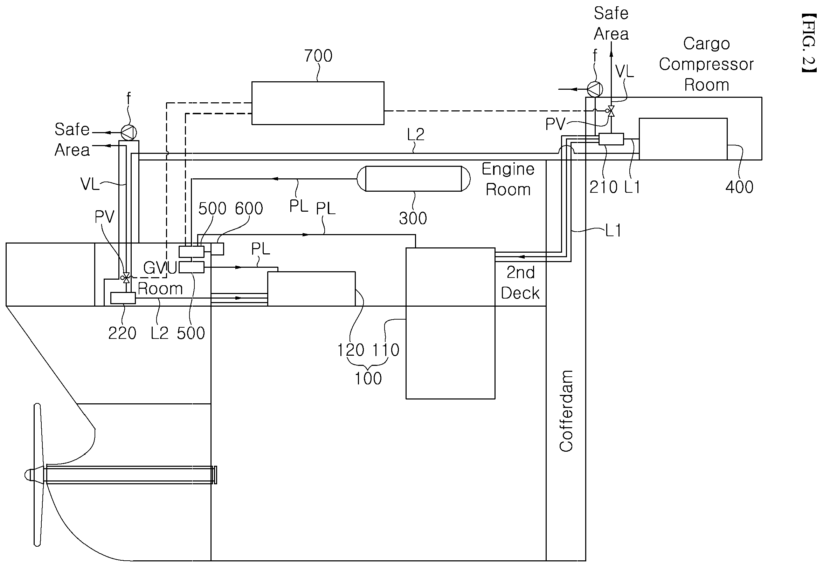

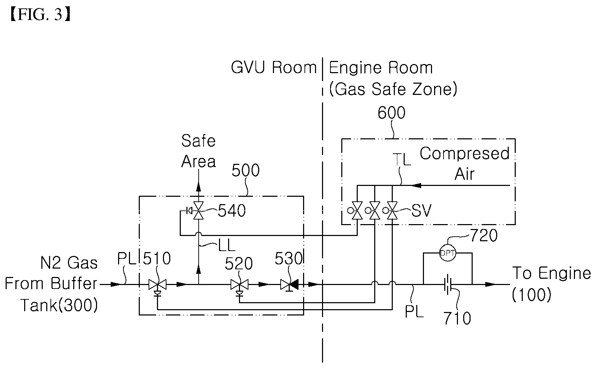

FIG. 2 is a schematic diagram of a gas purging system for ships according to the present invention and FIG. 3 is a piping diagram of a portion of the gas purging system for ships, at which a backflow prevention valve set is disposed.

Referring to FIG. 2, the gas purging system for ships according to the present invention includes: an engine 100 fueled by a liquefied gas such as LNG; a gas valve unit (GVU) 210; 220 controlling the pressure and flow rate of fuel gas supplied to the engine 100; and a buffer tank 300 supplying an inert gas to purge an interior of the engine 100 and an interior of a line along which the fuel gas is supplied to the engine 100.

The engine 100 may be an engine capable of operating on LNG and may include a dual fuel engine (DF engine) that can be fueled by both heavy fuel oil and natural gas.

In the present invention, the engine 100 may include a high-pressure gas injection engine 110 powered by vaporized LNG compressed to a high pressure and a low-pressure gas injection engine 120 powered by vaporized LNG compressed to a low pressure.

The high-pressure gas injection engine 110 may be powered by vaporized LNG compressed to 10 bar or more and may be, for example, a propulsion engine, such as an ME-GI engine.

The low-pressure gas injection engine 120 may be powered by vaporized LNG compressed to less than 10 bar and may be, for example, a general DF generator engine, such as a dual fuel diesel generator (DFDG), or a propulsion engine, such as an extreme dual fuel (X-DF) engine.

The high-pressure gas injection engine 110 and the low-pressure gas injection engine 120 are placed in an engine room located on the stern side of a ship.

In addition, the ship according to the present invention may be provided with an LNG storage tank (not shown) in which LNG (natural gas) to be supplied to the engine 100 is stored in a liquefied state. LNG stored in the LNG storage tank may be compressed and vaporized by a fuel gas supply system (FGSS) 400 prior to being supplied as fuel to the engine 100.

The fuel gas supply system 400 may include a vaporizer forcibly vaporizing LNG and a compressor compressing the vaporized LNG to a pressure required for the engine. Generally, the fuel gas supply system 400 is placed in a cargo compressor room.

LNG compressed and vaporized by the fuel gas supply system 400 may be supplied to the engine 100 along a fuel supply line L1; L2. Since fuel pressure/temperature requirements are different for each of the high-pressure gas injection engine 110 and the low-pressure gas injection engine 120, a first fuel supply line L1 connected to the high-pressure gas injection engine 110 is separately provided from a second fuel supply line L2 connected to the low-pressure gas injection engine 120.

Specifically, LNG vaporized and compressed to a high pressure by the fuel gas supply system 400 is supplied to the high-pressure gas injection engine 110 along the first fuel supply line L1 and LNG vaporized and compressed to a low pressure by the fuel gas supply system 400 is supplied to the low-pressure gas injection engine 120 along the second fuel supply line L2.

In such an LNG-fueled ship, vaporized LNG is supplied to the engine 110; 120 through a pipe connected from the LNG storage tank to the engine, wherein a line L1; L2 along which vaporized LNG is supplied to the engine 110; 120 is provided with a gas valve unit 210; 220.

The gas valve unit 210; 220 is a group of valves controlling the pressure and flow rate of vaporized LNG supplied to the engine 100. The gas valve unit 210; 220 is disposed between the engine 100 and the LNG storage tank to supply vaporized LNG at a pressure corresponding to a load of the engine 100 and includes a filter, a gas supply valve, a gas flow meter, and the like.

In the present invention, the gas valve unit 210; 220 may include a high-pressure gas valve unit 210 controlling the pressure and flow rate of vaporized LNG supplied to the high-pressure gas injection engine 110 and a low-pressure gas valve unit 220 controlling the pressure and flow rate of vaporized LNG supplied to the low-pressure gas injection engine 120.

The high-pressure gas valve unit 210 is disposed on the first fuel supply line L1. Although the high-pressure gas valve unit 210 is typically placed in the cargo compressor room, as shown in FIG. 2, it will be understood that the present invention is not limited thereto and the high-pressure gas valve unit 210 may be placed along with the low-pressure gas valve unit 220 in a gas valve unit room (GVU Room) described below.

The low-pressure gas valve unit 220 is disposed on the second fuel supply line L2 and may be placed in the gas valve unit room. The gas valve unit room is located in a separate area isolated from the engine room, and may be located on the stern side behind the engine room, as shown in FIG. 2. However, it will be understood that the present invention is not limited thereto and the low-pressure gas valve unit may be placed along with the high-pressure gas valve unit 210 in the cargo compressor room.

The cargo compressor room and the gas valve unit room described above are a space where vaporized LNG is handled and are classified as a gas hazardous zone. Thus, the cargo compressor room and the gas valve unit room should be periodically ventilated for safety reasons and are typically designed to be ventilated with dry air 30 times per hour against potential gas leakage. Accordingly, each of the cargo compressor room and the gas valve unit room may be provided with a ventilation fan F to be ventilated at any time.

A section of the first fuel supply line L1 extending at least from the cargo compressor room (or extending from the gas valve unit room when the high-pressure gas valve unit 210 is placed in the gas valve unit room) to the high-pressure gas injection engine 110 is preferably formed of a double-walled pipe, wherein an interior of the double-walled pipe may be ventilated at a rate of 30 air changes per hour.

Similarly, a section of the second fuel supply line L2 extending at least from the gas valve unit room to the low-pressure gas injection engine 120 is preferably formed of a double-walled pipe, wherein an interior of the double-walled pipe may be ventilated at a rate of 30 air changes per hour.

The buffer tank 300 stores an inert gas supplied to purge the interior of the engine 100 and the interior of the fuel supply line L1; L2 along which vaporized LNG is supplied to the engine 100. Generally, nitrogen (N₂) is used as the inert gas. In the following, the present invention will be described using nitrogen as an example.

The ship according to the present invention may be provided with a separate nitrogen generator (not shown) to generate nitrogen as a purge gas. Nitrogen generated by the nitrogen generator may be temporarily stored in the buffer tank 300 to be supplied as a purge gas upon purging of an engine system.

The buffer tank 300 may be placed in the engine room. The engine room is classified as a gas safe zone and should be protected from a gas hazardous zone. For example, direct access to the gas safe zone from the gas hazardous zone is prohibited (an air lock is installed if necessary) and a fuel supply pipe passing through the gas safe zone should be formed of a double-walled pipe or a ducted pipe to be gas tight.

A purge line PL may be connected from the buffer tank 300 to the engine 100 to supply nitrogen gas from the buffer tank 300 to the engine 100. The purge line PL may include a purge line connecting the buffer tank 300 to the high-pressure gas injection engine 110 and a purge line connecting the buffer tank 300 to the low-pressure gas injection engine 120.

The purge line PL may be provided with a backflow prevention valve set 500 to prevent backflow of vaporized LNG from the engine 100 into the buffer tank 300.

There may be provided one backflow prevention valve set 500 for each engine, or there may be provided only two backflow prevention valve sets 500: one for a main engine for propulsion of the ship; and the other for a generator engine for generation of electricity supplied to the ship.

The backflow prevention valve set 500 may be placed in a gas hazardous zone that is ventilated at a rate of 30 air changes per hour, such as the gas valve unit room. However, the present invention is not limited thereto and the backflow prevention valve set 500 may be placed in the cargo compressor room or any other gas hazardous zones. However, it is desirable that the backflow prevention valve set 500 be placed as close as possible to the engine 100 and the buffer tank 300 in terms of material savings. Accordingly, in the present invention, the backflow prevention valve set 500 is preferably placed in the gas valve unit room, as shown in FIG. 2.

Specific details of the backflow prevention valve set 500 will be discussed in more detail further below.

Nitrogen gas supplied from the buffer tank 300 to purge the engine system may push residual gas out of the engine 100, and the residual gas pushed out of the engine 100 and the nitrogen gas may be discharged to a safe area (for example, outside atmosphere) through the gas valve unit 210; 220.

A vent line VL may be connected to each of the gas valve units 210, 220 to discharge the residual gas and the nitrogen gas discharged from the engine 100 to a safe area, wherein each vent line VL may be provided with a purge valve PV to open/close the vent line.

In the following, the operation of purging each of the high-pressure gas injection engine 110 and the low-pressure gas injection engine 120 will be described.

Upon purging of the high-pressure gas injection engine 110, first, supply of vaporized LNG from the fuel gas supply system 400 to the high-pressure gas injection engine 110 is shut off. Thereafter, the purge valve PV on the vent line VL connected to the high-pressure gas valve unit 210 is opened while supplying nitrogen gas from the buffer tank 300 to the high-pressure gas injection engine 110. Residual gas pushed out of the high-pressure gas injection engine 110 by the nitrogen gas supplied from the buffer tank 300 is discharged along with the nitrogen gas to a safe area through a portion of the first fuel supply line L1 and the high-pressure gas valve unit 210.

Purging of the low-pressure gas injection engine 120 may also be performed in a similar manner. Upon purging of the low-pressure gas injection engine 120, first, supply of vaporized LNG from the fuel gas supply system 400 to the low-pressure gas injection engine 120 is shut off. Thereafter, the purge valve PV on the vent line VL connected to the low-pressure gas valve unit 210 is opened while supplying nitrogen gas from the buffer tank 300 to the low-pressure gas injection engine 110. Residual gas pushed out of the low-pressure gas injection engine 110 by the nitrogen gas supplied from the buffer tank 300 is discharged along with the nitrogen gas to a safe zone through a portion of the second fuel supply line L2 and the low-pressure gas valve unit 220.

As such, the gas purging system according to the present invention supplies nitrogen gas directly to the engine 100 such that residual gas remaining in the engine system is purged from the engine 100 to the gas valve unit 210; 220, rather than injecting nitrogen gas into the fuel supply line to purge the interior of the engine system, as in the related art.

That is, in the gas purging system according to the present invention, purging of the engine system is performed in the sequence of engine 100→gas valve unit 210; 220-safe area, as opposed to a conventional gas purging system (see FIG. 1) in which purging of the engine system is performed in the sequence of gas valve unit 4→engine 1→safe area.

In addition, in the present invention, the direction in which vaporized LNG is supplied as fuel for the engine 100 is reversed with respect to the direction in which residual gas is discharged upon purging of the engine system.

According to the present invention, since nitrogen gas from the buffer tank 300 is directly injected into the engine 100 and residual gas remaining in the engine 100 is discharged through the gas valve unit 210; 220, it is possible to eliminate the need to install a separate vent pipe within the engine room, thereby reducing the material quantity per yard as compared to conventional gas purging systems.

In addition, according to the present invention, since pipes for discharging residual gas purged from the engine 100 are mostly placed in the gas valve unit room or the cargo compressor room, it is possible to significantly reduce the number of gas pipes placed in the engine room, thereby ensuring maximized safety. Since there is a lot of electrical equipment, oil handling equipment, ignition equipment, and the like in the engine room, it is preferable to avoid placement of gas pipes in the engine room as much as possible, as in the present invention. In addition, since the gas valve unit room (gas hazardous zone) is designed against potential gas leakage and is ventilated at a rate of 30 air changes per hour, utilizing the gas valve unit room to discharge residual gas from the engine system is beneficial in terms of effective ventilation. Further, according to the present invention, since purging of the engine system is performed in a direction from the engine 100 to the gas valve unit 210, 220 such that residual gas is discharged through the fuel supply line L1; L2, which is formed of a double-walled pipe, it is possible to increase utilization of existing equipment and eliminate the need for a separate double-walled pipe for discharge of the residual gas, which is beneficial in terms of cost-effectiveness.

For ships in which piping for purging of the engine system is directly connected to the engine system, such as LNGCs and LFSs, classification societies require that a check valve be installed to prevent backflow of fuel gas from the engine system into a nitrogen supply unit, and that a double block valve and a bleed valve be further installed and configured for remote control.

Such requirements are already mandatory in the IGF CODE and will become mandatory as the number of LFSs is expected to increase in the future.

However, such valves are quite expensive as the valves should be placed in a gas hazardous zone and need to be protected by an explosion-proof enclosure. Accordingly, it is expected that installation of the three expensive valves at every point where the purge pipe is directly connected to the engine system will have a significant negative impact on the construction price of the ship.

Accordingly, the inventors of the present invention have developed a concept in which a double block valve, a bleed valve, and a check valve are combined into a single valve set. In the following, a specific structure of the backflow prevention valve set 500 designed based on this concept will be described.

Referring to FIG. 3, the backflow prevention valve set 500 according to the present invention includes a first shutoff valve 510, a second shutoff valve 520, and a check valve 530 disposed sequentially on the purge line PL along which nitrogen gas is supplied from the buffer tank 300 to the engine 100.

The backflow prevention valve set 500 according to the present invention may further include a leaked gas discharge line LL branched off of the purge line PL between the first shutoff valve 510 and the second shutoff valve 520 and a bleed valve 540 disposed on the leaked gas discharge line LL.

The first shutoff valve 510 and the second shutoff valve 520 serve to open/close an internal channel of the purge line PL and may be configured as a valve switchable between an open position and a closed position, such as a ball valve.

The first shutoff valve 510 and the second shutoff valve 520 are sequentially disposed on upstream and downstream sides of the purge line PL, respectively, and are always simultaneously opened or closed to double block or permit the flow of nitrogen gas.

The first check valve 510 and the second check valve 520 are normally kept closed and are only opened when nitrogen gas is supplied from the buffer tank 300 to the engine 100.

The check valve 530 is disposed on a most downstream side of the purge line PL to prevent backflow of vaporized LNG from the engine 100.

Despite being always open, the check valve 530 permits one-way flow of a fluid, thereby primarily preventing vaporized LNG from flowing back from the engine 100.

In the present invention, the check valve 530 may be configured as a closable check valve to be shut off for maintenance work.

The bleed valve 540 is disposed between the first check valve 510 and the second check valve 520 to release residual pressure from the purge line between the first check valve 510 and the second check valve 520 when the first check valve 510 and the second check valve 520 are closed.

The bleed valve 540 is always normally open such that, in the event of leakage at the second shutoff valve 520, gas leaked into the purge line between the first shutoff valve 510 and the second shutoff valve 520 can be discharged to a safe area. Here, the first shutoff valve 510 serves to secondarily block the leaked gas, thereby ensuring double prevention of backflow from the engine 1000.

The bleed valve 540 is closed when the first shutoff valve 510 and the second shutoff valve 520 are opened. That is, the bleed valve 540 is always switched to an opposite position with respect to the first and second shutoff valves 510, 520.

The backflow prevention valve set 500 according to the present invention may further include an actuator opening/closing the first and second shutoff valves 510, 520 and the bleed valve 540, wherein the actuator may be connected to a tubing line TL along which compressed air (or a working fluid) is supplied to the actuator and the tubing line TL may be provided with a solenoid valve SV.

When there are multiple tubing lines TLs, there may be multiple solenoid valves SVs each corresponding to a respective one of the multiple tubing lines TLs. Herein, the multiple solenoid valves SVs may be collectively referred to as a solenoid valve unit 600.

Although the tubing line is not a gas handing line and thus the solenoid valve unit 600 does not require explosion-proof design, placing the solenoid valve unit 600 in the gas valve unit room is undesirable in terms of cost-effectiveness since an expensive explosion-proof enclosure is required to ensure safety of the solenoid valve unit 600, which is electrical equipment.

According to the present invention, the solenoid valve unit 600 is placed in the engine room (gas safe zone) at a location proximate to a wall separating the engine room from the gas valve unit room with only the tubing line TL extending into the gas valve unit room through the wall, as shown in FIG. 2. With this arrangement, a general solenoid valve not requiring an expensive explosion-proof enclosure can be employed, which is advantageous in terms of cost-effectiveness.

The backflow prevention valve set 500 according to the present invention may further include an orifice 710 disposed on the purge line PL downstream of the check valve 530 and a differential pressure transmitter (DTP) 720 measuring a differential pressure across the orifice 710. With this arrangement, additional stability can be secured by tripping the engine 100 when backflow of vaporized LNG from the engine 100 creates a differential pressure across the orifice 710.

As described above, in the backflow prevention valve set 500 according to the present invention, the three valves 510, 520, 530 are operatively associated with one another. Accordingly, the backflow prevention valve set 500 may be configured such that opening/closing operation of the valves 510, 520, 530 can be controlled by one actuator.

That is, since the bleed valve 540 is always switched to an opposite position with respect to the first and second shutoff valves 510, 520 in the present invention, simultaneous operation of the valves 510, 520, 540 is possible by connecting the valves 510, 520, 540 to one actuator with the installation direction of the bleed valve 540 reversed to that of the first and second shutoff valves 510, 520.

In the following, two different embodiments in which opening/closing operation of the bleed valve 540 and the first and second shutoff valves 510, 520 is controlled by one actuator will be discussed in detail.

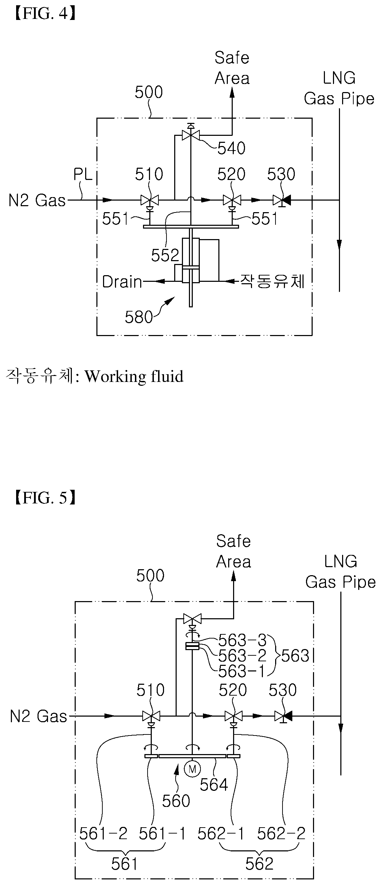

FIG. 4 is a diagram of a first embodiment of the backflow prevention valve set according to the present invention and FIG. 5 is a diagram of a second embodiment of the backflow prevention valve set according to the present invention. In FIG. 4 and FIG. 5, "LNG gas pipe" may refer to a pipe inside the engine 100 of FIG. 2.

Referring first to FIG. 4, the backflow prevention valve set 500 according to the first embodiment may further include a reciprocating actuator 580 controlling opening/closing of the first shutoff valve 510, the second shutoff valve 520, and the bleed valve 540.

The reciprocating actuator 580 may be hydraulically or pneumatically driven and may include a first power transmission 551 connected to the first shutoff valve 510 and the second shutoff valve 520 and a second power transmission 552 connected to the bleed valve 540.

The first power transmission 551 and the second power transmission 552 may be driven by the reciprocating motion of a piston inside a cylinder of the reciprocating actuator 580 to open/close the valves 510, 520, 540.

Here, the installation direction of the bleed valve 540 connected to the second power transmission 552 may be reversed to that of the first and second shutoff valves 510, 520 connected to the first power transmission 551, such that switching direction of the bleed valve 540 actuated by the second power transmission 552 is always opposite to that of the first and second shutoff valves 510, 520 actuated by the first power transmission 551.

For example, when a working fluid is delivered to a lower portion of the reciprocating actuator 580, the piston inside the cylinder is pushed upwards, such that the first power transmission 551 is driven by the motion of the piston to open the first and second shutoff valves 510, 520 and the second power transmission 552 is driven by the motion of the piston to close the bleed valve 540.

Conversely, when a working fluid is delivered to an upper portion of the reciprocating actuator 580, the piston inside the cylinder is moved downwards, such that the first power transmission 551 is driven by the motion of the piston to close the first and second shutoff valves 510, 520 and the second power transmission 552 is driven by the motion of the piston to open the bleed valve 540.

That is, the reciprocating actuator 580 according to this embodiment is configured to actuate the bleed valve 540 and the first and second shutoff valves 510, 520 such that the switching position of the bleed valve 540 is opposite to that of the first and second shutoff valves 510, 520.

Although the reciprocating actuator 580 according to this embodiment may be hydraulically or pneumatically driven, it will be understood that the present invention is not limited thereto and the reciprocating actuator 580 may include any other device that can control opening/closing of the valves. In addition, the first power transmission 551 and the second power transmission 552 may employ other mechanisms than that described above.

Referring next to FIG. 5, the backflow prevention valve set 500 according to the second embodiment is substantially the same as the backflow prevention valve set 500 according to the first embodiment except that a rotary actuator 560 is used in place of the reciprocating actuator 580. Accordingly, detailed description of the same components as those of the first embodiment will be omitted.

The rotary actuator 560 may include: a main shaft gear 564 rotated clockwise or counterclockwise by a motor or any other rotary drive unit; a first power transmission 561 receiving torque from the main shaft gear 564 to open/close the first shutoff valve 510; a second power transmission 562 receiving torque from the main shaft gear 564 to open/close the second shutoff valve 520; and a third power transmission 563 receiving torque from the main shaft gear 564 to open/close the bleed valve 540.

The first to third power transmissions 561, 562, 563 may receive the rotational motion from the main shaft gear 564 to open/close the valves 510, 520, 540, respectively, using torque thereof.

Here, the first power transmission 561 and the second power transmission 562 are configured to rotate in an opposite direction with respect to the main shaft gear 564, such that the first shutoff valve 510 and the second shutoff valve 520 can be switched to same position with respect to each other.

The third power transmission 563 is configured to rotate in the same direction as the main shaft gear 564, such that the bleed valve 540 can be switched to an opposite position with respect to the first and second shutoff valves 510, 520.

The main shaft gear 564 may be provided in the form of a cylindrical gear having teeth on an outer peripheral surface thereof, and may be, for example, a spur gear having a row of teeth parallel to an axis thereof.

The first power transmission 561 may include: a first transmission gear 561-1 meshed with the main shaft gear 564 to be rotated in an opposite direction with respect to the main shaft gear 564; and a first connector 561-2 connected between the first transmission gear 561-1 and the first shutoff valve 510 to open/close the first shutoff valve 510 according to the direction of rotation of the first transmission gear 561-1.

The second power transmission 562 may include: a second transmission gear 562-1 meshed with the main shaft gear 564 to be rotated in an opposite direction with respect to the main shaft gear 564; and a second connector 562-2 connected between the second transmission gear 562-1 and the second shutoff valve 520 to open/close the second shutoff valve 520 according to the direction of rotation of the second transmission gear 562-1.

The third power transmission 563 may include: a third transmission gear 563-1 receiving the rotational motion from the main shaft gear 564 to be rotated in the same direction as the main shaft gear 564; a fourth transmission gear 563-2 vertically meshed with the third transmission gear 563-1 to be rotated in the same direction as the third transmission gear 563-1; and a third connector 563-3 connected between the fourth transmission gear 563-2 and the bleed valve 540 to open/close the bleed valve 540 according to the direction of rotation of the fourth transmission gear 563-2. When the third connector 563-3 is directly connected to the main shaft gear 564, the third transmission gear 563-1 and the fourth transmission gear 563-2 may be omitted from the third power transmission 563.

As such, the rotary actuator 560 according to this embodiment is configured to actuate the bleed valve 540 and the first and second shutoff valves 510, 520 such that the switching position of the bleed valve 540 is opposite to that of the first and second shutoff valves 510, 520.

In this embodiment, the gears 561-1, 562-1, 563-1, 563-2, 564 constituting the rotary actuator 560 may be replaced with any other suitable rotary members known in the art.

These embodiments described above, in which the first and second shutoff valves 510, 520, the check valve 530, and the bleed valve 540 are combined into a single valve set and the valves 510, 520, 540, which need to be switched between the open and closed positions, are simultaneously operated by one actuator 580; 560, can reduce the number of cables and working fluid supply lines through simplification of control logic, thereby realizing a compact backflow prevention valve set that is easy to install in a confined space in the ship. In addition, according to these embodiments, cost savings can be achieved by reducing the number of actuators 580/560 for valve operation and combining several valves into a single valve set.

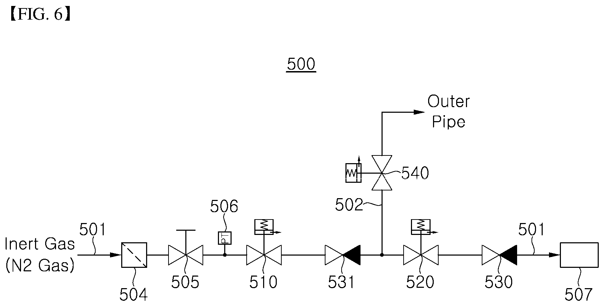

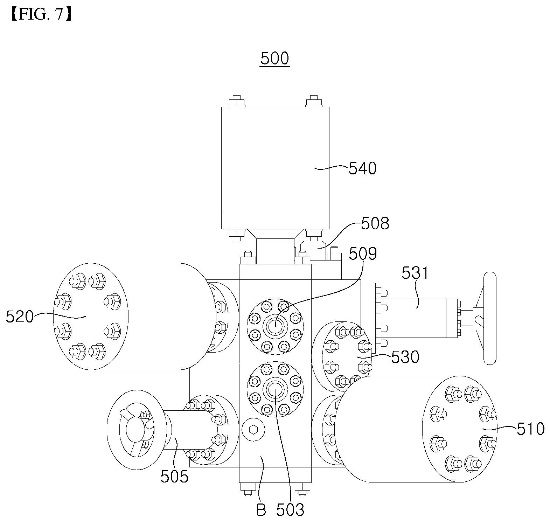

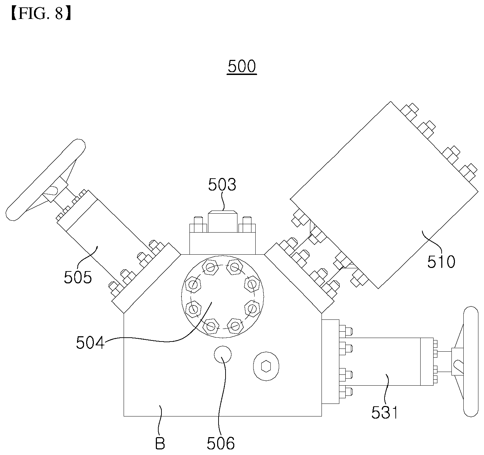

FIG. 6 is a piping diagram of a backflow prevention valve set according to another embodiment of the present invention, FIG. 7 is an exterior view of the backflow prevention valve set, and FIG. 8 is a bottom view of the backflow prevention valve set of FIG. 7.

In FIG. 6, a piping system of the backflow prevention valve set according to the present invention is shown in more detail. No further description will be given of what has already been described in FIG. 3, which shows only the essential components of the backflow prevention valve set.

Referring to FIG. 6, the backflow prevention valve set 500 according to this embodiment may include a first channel 501 providing a passage for nitrogen gas to enter and exit the backflow prevention valve set and a second channel 502 branched off of the first channel 501 to discharge leaked gas therethrough.

Referring to FIG. 7, the backflow prevention valve set 500 according to this embodiment has the aforementioned valves integrally incorporated into one body B, wherein the body is formed therein with a channel through which nitrogen gas flows and a channel through which leaked gas flows.

Accordingly, in the drawings, the first channel 501 may be regarded as part of the purge line PL described above and the second channel 502 may be regarded as the leaked gas discharge line LL described above. It should be noted that reference numerals used in FIG. 6 are different from those used in FIG. 3.

The backflow prevention valve set 500 according to the present invention may further include: a filter 504 disposed on a most upstream side of the first channel 501 through which nitrogen gas flows; a manual valve 505 and a pressure sensor 506 disposed sequentially between the filter 504 and the first shutoff valve 510; and a sub-check valve 531 disposed in the first channel 501 downstream of the first shutoff valve 510 and ahead of a point at which the second channel 502 is branched off of the first channel 501.

The filter 504 serves to filter out foreign matter contained in nitrogen gas introduced into the first channel 501, thereby preventing foreign matter from sticking to the valves disposed downstream of the filter 504.

The manual valve 505 functions to physically shut off the first channel 501. The manual valve 505 is a valve that is operated manually by an operator, and may be always normally open and may be shut off during maintenance work.

The pressure sensor 506 measures the pressure of nitrogen gas supplied to the first channel 501 to determine whether nitrogen gas is properly supplied upon purging of the engine system.

The sub-check valve 531 serves to secondarily prevent vaporized LNG gas flowing back from the engine from leaking to a nitrogen supply unit. In the present invention, the sub-check valve 531 is a complementary component to the check valve 530 and may be omitted if necessary. Like the check valve 530, the sub-check valve 531 may be configured as a closable check valve to be shut off for maintenance work.

A gas block 507 may be connected to a downstream end of the first channel 501. The gas block 507 acts as a connector connecting the first channel 501 to a pipe in need of purging and is an area where nitrogen gas can actually meet gas flowing back from the engine.

In FIG. 6, "outer pipe" refers to a pipe through which leaked gas discharged from the second channel 502 is discharged to an outside safe area.

Referring to FIG. 7 and FIG. 8, the backflow prevention valve set 500 according to the present invention has a structure in which the aforementioned valves 505, 510, 520, 530, 531, 540 and other components 504, 506 are integrated together through one body B. In other words, the backflow prevention valve set 500 according to the present invention may be manufactured as a single assembly.

The body B may be formed therein with pipes as shown in FIG. 6 and may be provided on an outer surface thereof with the valves 505, 510, 520, 540 opening/closing the pipes inside the body B and the valves 530, 531 permitting one-way flow of a fluid through the pipes inside the body B.

In addition, the body B may be formed with a nitrogen gas inlet 503 through which nitrogen gas is introduced into the first channel 501 (see FIG. 6) inside the body, a nitrogen gas outlet 508 through which the nitrogen gas is discharged from the first channel 501 (see FIG. 6), and a leaked gas outlet 509 through which leaked gas is discharged from the second channel 502 inside the body.

The nitrogen gas inlet 503 may be connected to the purge line PL extending from the buffer tank 300 (see FIG. 2) and the nitrogen gas outlet 508 may be connected to the gas block 507 described above. The leaked gas outlet 509 may be connected to the outer pipe shown in FIG. 6.

The backflow prevention valve set 500 according to the present invention, in which the first and second shutoff valves 510, 520, the check valve 530, and the bleed valve 540 are combined, can have a compact structure through simplification of control logic for backflow prevention, thereby providing cost savings while improving space utilization in the ship due to ease of installation in a confined space.

In addition, by operatively connecting the valves 510, 520, 540, which need to be switched between the open and closed positions, to one another through less than three actuators, the above effects can be maximized through reduction in number of cables and working fluid supply lines.

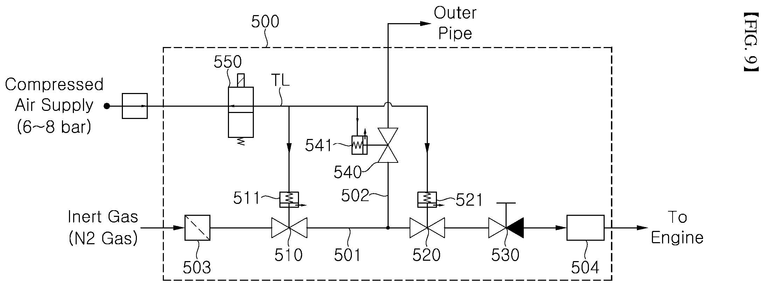

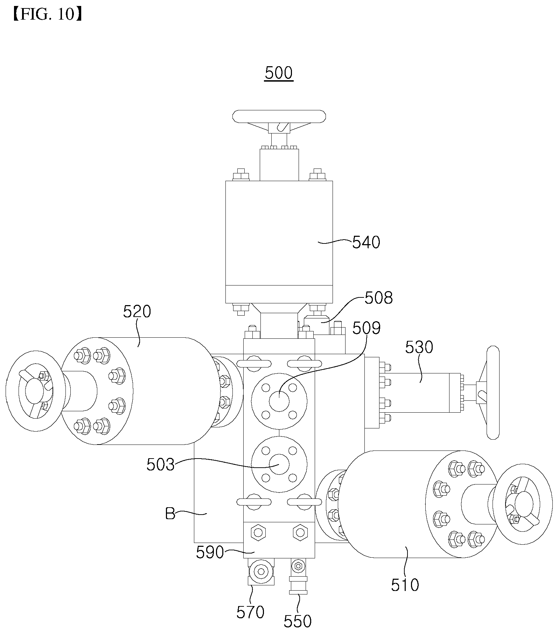

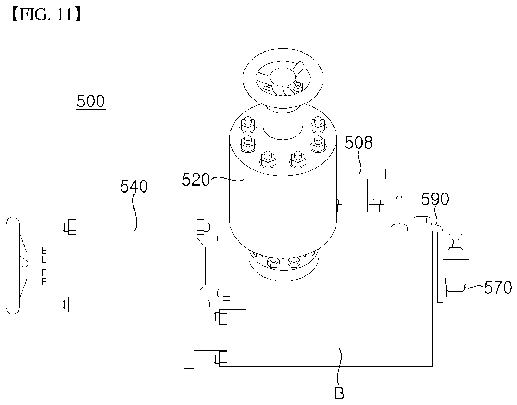

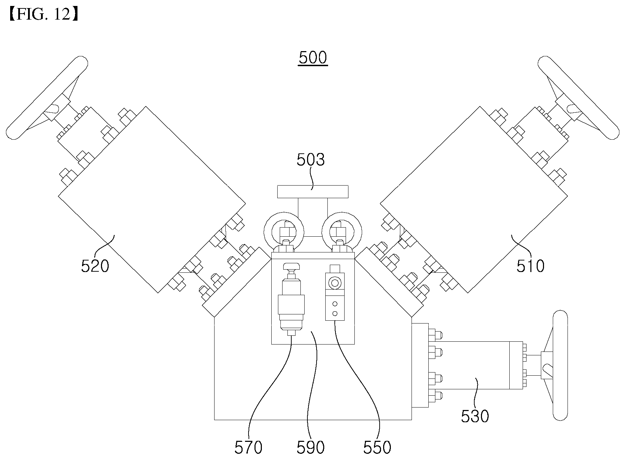

FIG. 9 is a schematic diagram of a backflow prevention valve set according to a further embodiment of the present invention. FIG. 10 is a front view of the backflow prevention valve set, FIG. 11 is a side view of the backflow prevention valve set, and FIG. 12 is a bottom view of the backflow prevention valve set.

Referring to FIG. 9, the backflow prevention valve set 500 according to this embodiment includes: a first channel 501 formed therein to define a passage for nitrogen gas to flow through; an air filter regulator 570, a first shutoff valve 510, a second shutoff valve 520, and a check valve 530 sequentially disposed in the first channel 501; a second channel 502 branched off of the first channel 501 between the first shutoff valve 510 and the second shutoff valve 520 to discharge leaked gas therethrough; a bleed valve 540 disposed in the second channel 502; and a gas block 504 disposed at a downstream end of the first channel 501.

Referring to FIG. 10 to FIG. 12, the backflow prevention valve set 500 according to this embodiment has a structure in which the aforementioned components are integrally incorporated into one body B, wherein the body B may be formed therein with the channel 501 through which nitrogen gas flows and the channel 502 through which leaked gas flows.

The air filter regulator 570 is disposed on a most upstream side of the first channel 501 and serves to filter out foreign matter contained in nitrogen gas introduced into the first channel 501 and regulate the pressure, velocity, flow rate, and the like of the nitrogen gas.

The gas block 504 serves as a connector connecting the first channel 501 to purge lines PL1, PL2 extending to the engine 100 and is an area where nitrogen gas can actually meet a gas flowing back from the engine.

In FIG. 9, "outer pipe" refers to a pipe through which leaked gas discharged from the second channel 502 is discharged to an outside safe area.

Each of the first shutoff valve 510 and the second shutoff valve 520 serves to open/close the first channel 501 and may be configured as, for example, a valve switchable between an open position and a closed position, such as a ball valve.

The first shutoff valve 510 and the second shutoff valve 520 are disposed on upstream and downstream sides of the first channel 501, respectively, and are always simultaneously opened or closed to double block or permit flow of nitrogen gas through the first channel 501.

The check valve 530 is disposed on a most downstream side of the first channel 501 to prevent backflow of vaporized LNG gas from the engine 100. Despite being always open, the check valve 530 functions to permit one-way flow of a fluid, thereby primarily preventing vaporized LNG from flowing back from the engine 100.

In the present invention, the check valve 530 may be configured as a closable check valve to be shut off for maintenance work. Here, the check valve 530 may be configured to be manually switched between an open position and a closed position.

The bleed valve 540 is disposed between the first shutoff valve 510 and the second shutoff valve 520 and serves to release residual pressure in the first channel between the first shutoff valve 510 and the second shutoff valve 520 when the first shutoff valve 510 and the second shutoff valve 520 are closed.

In the event of leakage at the second shutoff valve 520, a gas leaked into the first channel between the first shutoff valve 510 and the second shutoff valve 520 can be discharged to a safe area through the second channel 502 by opening the bleed valve 540. Here, the first shutoff valve 510 serves to secondarily block the leaked gas, thereby providing double prevention of backflow from the engine 100.

The bleed valve 540 is closed when the first shutoff valve 510 and the second shutoff valve 520 are opened. That is, the bleed valve 540 is always switched to an opposite position with respect to the first and second shutoff valves 510, 520.

The backflow prevention valve set 500 according to this embodiment may further include actuators 511, 521, 541 opening/closing the first shutoff valve 510, the second shutoff valve 520, and the bleed valve 540, respectively, wherein the actuators 511, 521, 541 may be connected to a tubing line TL along which compressed air (or a working fluid) is supplied to drive the actuators and the tubing line TL may be provided with a solenoid valve 550 to control the pressure of the fluid supplied to the actuators.

Although FIG. 9 shows three actuators 511, 521, 541 each corresponding to a respective one of the first shutoff valve 510, the second shutoff valve 520, and the bleed valve 540, it will be understood that the present invention is not limited thereto and there may be provided less than three actuators.

As described above, in the backflow prevention valve set 500 according to the present invention, the first shutoff valve 510, the second shutoff valve 520, and the bleed valve 540, which need to be switched between open and closed positions, are operatively associated with one another. That is, the first shutoff valve 510 and the second shutoff valve 520 are always switched to the same position with respect to each other and the bleed valve 540 is always switched to an opposite position with respect to the first shutoff valve 510 and the second shutoff valve 520. Based on these operational characteristics of the valves 510, 520, 540, two or more of the valves 510, 520, 540 can be operated simultaneously using one actuator, making it possible to reduce the number of required actuators to less than three.

Specifically, since the bleed valve 540 is always switched to an opposite position with respect to the first and second shutoff valves 510, 520, simultaneous operation of the valves, 510, 520, 540 is possible by connecting the valves 510, 520, 540 to one actuator with the installation direction of the bleed valve 540 reversed to that of the first and second shutoff valves 510, 520, whereby a backflow prevention valve set 500 operated by one actuator can be realized.

Alternatively, a backflow prevention valve set 500 operated by two actuators may be realized by connecting the first shutoff valve 510 and the second shutoff valve 520 to one actuator and connecting the bleed valve 540 to another actuator, or by connecting one of the first and second shutoff valves 510 to one actuator and connecting the bleed valve 540 and the other shutoff valve to another actuator while operatively connecting the bleed valve 540 to the other shutoff valve via a mechanical link such that the bleed valve 540 and the other shutoff valve can be switched to opposite positions with respect to each other.

Here, the actuator may be a single acting actuator (also referred to as a "spring return actuator") adapted to close the first and second shutoff valves 510, 520 and open the bleed valve 540 using spring force or the like in the event of electrical signal failure or compressed air failure, thereby providing a fail-safe function.

When there are one or more actuators 511, 521, 541, as shown in FIG. 9, there may be one or more tubing lines TL each corresponding to a respective one of the actuators 511, 521, 541. However, even when there are one or more tubing lines TL, it is preferable that the backflow prevention valve set 500 have a single solenoid valve 550 on a common line from which the multiple tubing lines extend.

Despite not being a gas handling device, the solenoid valve 550 is an electrical device that needs to be protected by an expensive explosion-proof enclosure when placed in the gas valve unit room. Accordingly, reducing the number of solenoid valves is beneficial in terms of cost.

The solenoid valve 550 may be placed along with the backflow prevention valve set 500 in the gas valve unit room. In the present invention, at most less than three solenoid valves 550, preferably one solenoid valve 550, are provided, as described above, making it possible to reduce cost for design of an expensive explosion-proof enclosure.

Alternatively, as shown in FIG. 2, a solenoid valve group 600 including the solenoid valves 550 may be placed in the engine room (gas safe zone) at a location proximate to a wall separating the gas valve unit room from the engine room while allowing only the tubing line TL connected from the solenoid valve group 600 to the actuators 511, 521, 541 to extend into the gas valve unit room through the wall, which makes it possible to use general solenoid valves.

With the arrangement described above, the number of solenoid valves 550 requiring an expensive explosion-proof enclosure can be reduced to one, or the necessity of an expensive explosion-proof enclosure can be eliminated by placing the solenoid valve group 600 in the engine room, which is a gas safe zone, thereby allowing a very cost-effective design. In addition, as will be described below, the solenoid valve 550 may be designed to be integrally incorporated into the backflow prevention valve set 500 to be easily installed in a confined space in the ship.

FIG. 10 to FIG. 12 show an external appearance of the backflow prevention valve set 500 according to this embodiment in more detail. Referring to FIG. 10 to FIG. 12, the backflow prevention valve set 500 according to this embodiment has a structure in which the aforementioned valves 510, 520, 530, 540 and other components 570, 504 are integrated together through one body B. That is, the backflow prevention valve set 500 according to the present invention may be configured and manufactured as a single assembly.

Although not shown in the drawings, the body B of the backflow prevention valve set 500 may be formed therethrough with the channels 501, 502 as shown in FIG. 9 and may be provided with the valves 510, 520, 540 opening/closing the channels 501, 502 and the check valve 530 permitting one-way flow of a fluid, wherein the valves 510, 520, 540, 530 are installed on the body B to be controllable from outside the body B. Specifically, the first and second shutoff valves 510, 520 and the check valve 530 may be inserted into a side surface of the body B from outside the body B to open/close the channel 501 formed inside the body B, and the bleed valve 540 may be inserted into an upper end of the body B from outside the body B to open/close the channel 502 formed inside the body B.

In addition, the body B may be formed on an outer surface thereof with a nitrogen gas inlet 503 through which nitrogen gas is introduced into the first channel 501 inside the body B, a nitrogen gas outlet 508 through which the introduced nitrogen gas is discharged from the first channel 501, and a leaked gas outlet 509 through which leaked gas is discharged from the second channel 502 inside the body B. Spool pieces forming the nitrogen gas inlet 503 and the nitrogen gas outlet 508 may be secured to the outer surface of the body B using an eye bolt. The nitrogen gas inlet 503 may be connected to the purge line PL extending from the buffer tank 300 (see FIG. 2) and the nitrogen gas outlet 508 may be provided with the gas block 504 in the form of a connector to be connected to the purge lines PL1, PL2 extending to the engine. The leaked gas outlet 509 may be connected to the outer pipe shown in FIG. 9.

The body B may be provided on a bottom surface thereof with a bracket 590 for mounting the air filter regulator 570 and the solenoid valve 550 described above. The bracket 590 may be bent to form a plane parallel to the bottom surface of the body B when secured to a lower end of the side surface of the body B. The air filter regulator 570 may be inserted into the first channel 501 from outside the body B. As described above, the backflow prevention valve set 500 may have a single solenoid valve 550.

In addition, the body B may be adapted for sensors, such as a pressure sensor, to be mounted thereon.

The backflow prevention valve set 500 according to the present invention, in which various valves 510, 520, 540, 550 and other components 570, 504, 503, 508, 509, 508 are integrally incorporated into one body B, can have a compact structure that is easy to install in a confined space such as the gas valve unit room, thereby improving space utilization in the ship.

In addition, the backflow prevention valve set 500 according to the present invention can ensure material savings and simplification of control logic for backflow prevention through design optimization, such as minimizing the number of components requiring an expensive explosion-proof enclosure and operatively connecting the valves 510, 520, 540, which need to be switched between open and closed positions, to one another through less than three actuators.

The backflow prevention valve set 500 according to the present invention is not limited in application to the gas purging system according to the present invention (see FIG. 2), but can be applied to any gas purging system in which a purge line is connected directly to a pipe through which liquefied gas is supplied as fuel for an engine, including a conventional gas purging system in which nitrogen gas is injected into a fuel supply line. Further, besides being applied to gas purging systems, the backflow prevention valve set 500 according to the present invention can be applied to other gas handling systems in which there is a possibility of backflow of a fluid.

The backflow prevention valve set 500 according to the present invention may be operated in two different ways: one for the high-pressure gas injection engine 110 and the other for the low-pressure gas injection engine 120. A first backflow prevention valve set 500A disposed on the first purge line PL1 connected to the high-pressure gas injection engine 110 may be operated differently from a second backflow prevention valve set 500B disposed on the second purge line PL2 connected to the low-pressure gas injection engine 120. In the following, operation of each of the first and second backflow prevention valve sets 500A, 500B will be described.

### 1) Operational characteristics of the first backflow prevention valve set 500A

During normal gas operation of the high-pressure gas injection engine 110, the first shutoff valve 510 and the second shutoff valve 520 of the first backflow prevention valve set 500A are normally closed and the bleed valve 540 of the first backflow prevention valve set 500A is normally open such that, in the event of leakage of fuel gas, leaked gas can be discharged to a safe area through the second channel 502. Herein, "normal gas operation" refers to operation in "gas mode" in which vaporized LNG is supplied as fuel for the engine.

Upon purging of the high-pressure gas injection engine 110, the first and second shutoff valves 510, 520 of the first backflow prevention valve set 500A are opened such that nitrogen gas is supplied from the buffer tank 300 to the high-pressure gas injection engine 110 to perform purging of the high-pressure gas injection engine 110.

The gas purging system for ships according to the present invention may further include a third purge line PL3 branched off of the first purge line PL1 downstream of the first backflow prevention valve set 500A and connected to the second fuel supply line L2. The third purge line PL3 may be provided with a purge valve PV3 that is switchable between an open position and a closed position.

Nitrogen gas supplied through the third purge line PL3 may be discharged through the vent line VL2 connected to the low-pressure gas valve unit 220 after purging a section of the second fuel supply line L2 extending from downstream of a master valve MV, which is disposed on the second fuel supply line L2 to control supply of fuel (vaporized LNG) to the low-pressure gas injection engine 120, to the low-pressure gas valve unit 220.

Purging performed using nitrogen gas supplied through the third purge line PL3 is referred to as manual purging to be distinguished from auto purging. Auto purging refers to automatic purging performed in conjunction with tripping of the engine 110; 120, wherein a section of the fuel supply line between the gas valve unit 210; 220 and the engine 110; 120 is purged. In the present invention, manual purging through the third purge line PL3 may be performed by pressing an operation button when the low-pressure gas injection engine 120 is to be maintained or when the low-pressure gas injection engine 120 is not operating in the gas mode for a long period of time.

As such, in the present invention, the first backflow prevention valve set 500A disposed on the high-pressure gas injection engine 110 side may be linked to a manual purging system, thus providing material savings.

### 2) Operational characteristics of the second backflow prevention valve set 500B

Before going into description of operational characteristics of the second backflow prevention valve set 500B disposed on the side of the low-pressure gas injection engine 120 side, in the present invention, a nitrogen supply valve NV and a check valve CV may be disposed on the second purge line PL2 between the second backflow prevention valve set 500B and the low-pressure gas injection engine 120.

The nitrogen supply valve NV is opened upon purging of the low-pressure gas injection engine 120 and is normally kept closed. The check valve CV serves to prevent backflow at a junction between the purge line PL and the low-pressure gas injection engine 120.

That is, backflow of the fuel gas from the low-pressure gas injection engine 120 can be preemptively prevented by the nitrogen supply valve NV and the check valve CV disposed between the second backflow prevention valve set 500B and the low-pressure gas injection engine 120.

A first pressure sensor PT1 may be disposed upstream of the nitrogen supply valve NV. The first pressure sensor PT1 may detect whether the pressure of nitrogen gas through the second purge line PL2 is normal to perform control such that the low-pressure gas injection engine 120 can no longer operate in the gas mode when the pressure of the nitrogen gas drops to a predetermined value (for example, about 7 bar) or less.

In addition, a second pressure sensor PT2 may be disposed between the nitrogen supply valve NV and the check valve CV. The second pressure sensor PT2 may detect pressure rise in the event of backflow of the fuel gas from the low-pressure gas injection engine 120 to declare a halt to gas mode operation of the low-pressure gas injection engine 120.

Now, operational characteristics of the second backflow prevention valve set 500B will be described. During normal gas operation of the low-pressure gas injection engine 120, the first shutoff valve 510 and the second shutoff valve 520 of the second backflow prevention valve set 500B are normally open to ensure sufficient pressure of nitrogen gas through the purge line PL2. Here, the bleed valve 540 is normally closed. With this configuration in which nitrogen gas is maintained in a pressurized state up to an upstream end of the low-pressure gas injection engine 120, it is possible to ensure fast response in the event of emergency.

If the pressure of nitrogen gas detected by the first pressure sensor PT1 disposed upstream of the nitrogen supply valve NV drops to a predetermined value (for example, about 7 bar) or less, control is performed with respect to the second backflow prevention valve set 500B such that the first and second shutoff valves 510, 520 are closed and the bleed valve 540 is opened. Pressure drop of nitrogen gas indicates that there is a high possibility of backflow due to higher pressure of the fuel gas than nitrogen gas. Accordingly, the second backflow prevention valve set 500B is controlled to perform a backflow prevention function. When the first and second shutoff valves 510, 520 are closed, the nitrogen supply valve NV may be kept closed. The nitrogen supply valve NV is controlled based on whether purging is performed in response to a signal indicating tripping of the low-pressure gas injection engine 120.

In addition, upon detection of backflow from the low-pressure gas injection engine 120 by the second pressure sensor PT2 disposed between the nitrogen supply valve NV and the check valve, the same control may be performed with respect to the second backflow prevention valve set 500B such that the first and second shutoff valves 510, 520 are closed and the bleed valve 540 is opened. Although gas mode operation of the low-pressure gas injection engine 120 should be stopped upon detection of backflow from the low-pressure gas injection engine 120, the low-pressure gas injection engine 120 may continue to operate in the gas mode for a short period of time by controlling the second backflow prevention valve set 500B to prevent backflow.

Upon purging of the low-pressure gas injection engine 120, the nitrogen supply valve NV and the first and second shutoff valves 510, 520 of the second backflow prevention valve set 500B are all opened such that nitrogen gas is supplied from the buffer tank 300 to the low-pressure gas injection engine 120.

In the present invention, the second backflow prevention valve set 500B disposed on the low-pressure gas injection engine 120 side is not linked to a manual purging system since the first and second shutoff valves 510, 520 are normally open.

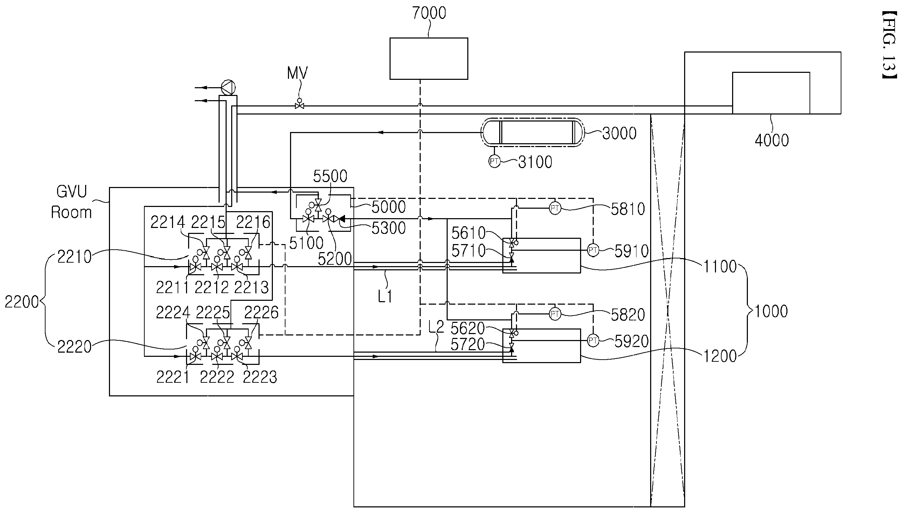

FIG. 13 is a block diagram of a nitrogen supply system for dual fuel engines according to one embodiment of the present invention.

Referring to FIG. 13, a nitrogen supply system for dual fuel engines according to the present invention includes: an engine unit 1000 capable of operating on fuel gas and configured as an engine for propulsion of a ship; a fuel gas supply system 4000 supplying the fuel gas depending on the condition of the engine unit 1000; a low-pressure gas valve unit 2200 controlling the pressure and flow rate of the fuel gas supplied to the engine unit 1000; a nitrogen supply unit supplying nitrogen to purge an interior of the engine unit 1000; and a ventilation unit discharging residual gas in the engine unit 1000 to a safe area in conjunction with supply of nitrogen.

The engine unit 1000 may include an engine capable of operating on liquefied natural gas (LNG), specifically a dual-fuel engine (DF engine). The DF engine is a kind of hybrid concept engine that can be fueled by both natural gas and heavy fuel oil (such as diesel). For example, in the case of the DF engine, when high engine load is required, such as when the engine is started, marine diesel fuel is used to increase power output of the engine and, during operation of a ship, gas fuel is used.

In addition, the engine unit 1000 may include a low-pressure gas injection engine that operates on vaporized LNG compressed to a low pressure, for example, a pressure of less than 10 bar. For example, the low-pressure gas injection engine may include a typical dual fuel generator engine (DFGE), such as a dual fuel diesel generator (DFDG), or a propulsion engine, such as an extreme dual fuel (X-DF) engine.

The engine unit 1000 may include one or more engines. Specifically, the engine unit 1000 may include a first engine 1100 and a second engine 1200, wherein the first engine 1100 and the second engine 1200 may be placed in an engine room (E/R).

The engine room is classified as a gas safe zone and should be protected from a gas hazardous zone. For example, direct access to the gas safe zone from the gas hazardous zone is prohibited (an air lock may be installed if necessary) and a fuel gas supply line (fuel supply piping) passing through the gas safe zone should be formed of a double-walled pipe or a ducted pipe to be gas-tight.

The fuel gas supply system 4000 is placed in a cargo compressor room and may be provided with a fuel storage tank (not shown) storing fuel gas (LNG) to be supplied to the first engine 1100 and the second engine 1200. The fuel gas stored in the fuel storage tank may be compressed and vaporized by the fuel gas supply system prior to being supplied as fuel for the first engine 1100 and the second engine 1200.

Specifically, the fuel gas may be supplied to the first engine 1100 and the second engine 1200 along a main fuel supply line connected to the fuel gas supply system 4000, wherein the main fuel supply line may be provided with a master gas valve to regulate supply of the fuel gas.

The main fuel supply line is branched into a first fuel supply line L1 and a second fuel supply line L2 within a gas valve unit room (GVU room), wherein the first fuel supply line L1 may be connected to the first engine 1100 and the second fuel supply line L2 may be connected to the second engine 1200.

Here, the first fuel supply line L1 connected from the gas valve unit room to the first engine 1100 and the second fuel supply line L2 connected from the gas valve unit room to the second engine 1200 are preferably formed of a double-walled pipe.

The gas valve unit room is classified as a gas hazardous zone and should be located in an area isolated from the engine room (E/R). In addition, for safety reasons, the gas valve unit room should be periodically ventilated. Generally, the gas valve unit room is ventilated at a rate of 30 air changes per hour against potential gas leakage. Thus, the gas valve unit room includes a ventilation unit to discharge gas to the outside.

Specifically, the ventilation unit may include a ventilation fan for ventilation in the gas valve unit room and a gas detection sensor disposed upstream of the ventilation fan to detect gas leakage.

The low-pressure gas valve unit 2200 is a group of valves controlling the pressure and flow rate of the fuel gas supplied to the engine unit (the first engine 1100; the second engine 1200) and may be disposed between the engine unit 1000 and the fuel gas supply system 4000.

Specifically, the low-pressure gas valve unit 2200 is disposed on the main fuel supply line and is preferably placed in the gas valve unit room.

The low-pressure gas valve unit 2200 includes a first low-pressure gas unit 2210 and a second low-pressure gas unit 2220, wherein the first low pressure gas unit 2210 may be disposed on the first fuel supply line L1 and the second low pressure gas unit 2220 may be disposed on the second fuel supply line L2.

The first low pressure gas unit 2210 includes a first pipe purge valve 2214, a second pipe purge valve 2215, an engine purge valve 2216, a pressure regulating valve 2211, a first shutoff valve 2212, and a second shutoff valve 2213, and the second low-pressure gas unit 2210 includes a first pipe purge valve 2224, a second pipe purge valve 2225, an engine purge valve 2226, a pressure regulating valve 2221, a first shutoff valve 2222, and a second shutoff valve 2223.

Specifically, the first pipe purge valve 2214; 2224 is disposed between the pressure regulating valve 2211; 2221 and the first shutoff valve 2212; 2222, the second pipe purge valve 2215; 2225 is disposed between the first shutoff valve 2212; 2222 and the second shutoff valve 2213; 2223, and the engine purge valve 2216; 2226 is disposed downstream of the second shutoff valve 2213; 2223.

That is, the first shutoff valve 2212; 2222 and the second shutoff valve 2213; 2223 are arranged at a predetermined interval on the fuel supply line (the first fuel supply line L1; the second fuel supply line L2) to ensure purging on a section-by-section basis.

Here, "purging" refers to removal of fuel gas remaining in the fuel supply line and the engine system when the engine is not operating for a long period of time or when the interior of the engine system is to be maintained.

The nitrogen supply unit may further include a nitrogen buffer tank 3000 storing nitrogen used as a purge gas, a nitrogen buffer tank pressure sensor 3100 measuring the pressure in the nitrogen buffer tank 3000, and a nitrogen supply regulation unit 330 (N2 DBB: N2 double block & bleed valve + closable valve) regulating nitrogen supply to the engine unit 1000.

The backflow prevention valve set 5000 is always open when the engine unit 1000 operates in gas mode and is preferably closed when the engine unit 1000 operates in diesel mode.

Specifically, the nitrogen buffer tank 3000 is placed in the engine room and the backflow prevention valve set 5000 is placed in the gas valve unit room, wherein the nitrogen buffer tank 3000 and the backflow prevention valve set 5000 may be connected to each other via a first nitrogen supply line and the backflow prevention valve set 5000 and the engine unit 1000 may be connected to each other via a second nitrogen supply line.

Here, the second nitrogen supply line may be branched into two nitrogen supply lines within the engine room to be connected to each of the first engine 1100 and the second engine 1200. That is, one backflow prevention valve set 5000 may be used for multiple engines.

The backflow prevention valve set 5000 serves to supply nitrogen gas as a purge gas and to prevent backflow of the fuel gas from the engine unit 1000, and is a valve group consisting of a first nitrogen shutoff valve 5100, a second nitrogen shutoff valve 5200, a first nitrogen supply valve 5300, and a first backflow prevention valve 5500.

The first nitrogen shutoff valve 5100 and the second nitrogen shutoff valve 5200 serve to shut off supply of nitrogen upon detection of leakage, and may be configured as a valve switchable between an open position and a closed position, such as a ball valve.

Here, the first nitrogen shutoff valve 5100 and the second nitrogen shutoff valve 5200 may be disposed sequentially and may be always simultaneously opened or closed to double block or permit flow of nitrogen gas supplied to the second nitrogen supply line.

The first nitrogen supply valve 5300 regulates nitrogen supply to the engine unit 1000 and may be configured as a check valve that has a function of permitting one-way flow of fluid. As the first nitrogen supply valve 5300 is configured as a check valve, the first nitrogen supply valve 5300 can also serve to prevent backflow of the fuel gas from the engine unit 1000.

Preferably, the first nitrogen supply valve 5300 is configured as a closable check valve to be shut off during maintenance. Here, the first nitrogen supply valve 5300 may be configured to be manually switched between an open position and a closed position.

The first backflow prevention valve 5500 may be configured as a bleed valve and is disposed between the first nitrogen shutoff valve 5100 and the second nitrogen shutoff valve 5200.

The first backflow prevention valve 5500 serves to discharge the fuel gas to the outside, prevent backflow into the nitrogen supply line, and release residual pressure in the nitrogen supply line between the first nitrogen shutoff valve 5100 and the second nitrogen shutoff valve 5200 when the first nitrogen shutoff valve 5100 and the second nitrogen shutoff valve 5200 are closed (shut off).

In the event of leakage at the second nitrogen shutoff valve 5200, a gas leaked into the nitrogen supply line between the first nitrogen shutoff valve 5100 and the second shutoff valve 332 can be discharged to a safe area by opening the first backflow prevention valve 5500. Here, the first nitrogen shutoff valve 5100 serves to secondarily block the leaked gas, thereby providing double prevention of backflow from the engine unit 1000.

That is, the first backflow prevention valve 5500 is closed (shut off) when the first nitrogen shutoff valve 5100 and the second nitrogen shutoff valve 5200 are opened. In other words, the first backflow prevention valve 5500 is always switched to an opposite position with respect to the first nitrogen shutoff valve 5100 and the second nitrogen shutoff valve 5200.

The backflow prevention valve set 5000 may further include an actuator (not shown) opening/closing the first nitrogen shutoff valve 5100, the second nitrogen shutoff valve 5200, and the first backflow prevention valve 5500.

The actuator may be a single acting actuator (also referred to as a "spring return actuator") adapted to close the first nitrogen shutoff valve 5100 and the second nitrogen shutoff valve 5200 and open the first backflow prevention valve 5500 using spring force or the like in the event of electrical signal failure or compressed air failure, thereby providing a fail-safe function.

The engine unit 1000 includes a second nitrogen supply valve 5610; 5620, a first pressure sensor 5810; 5820, a second backflow prevention valve 5720; 5700, and a second pressure sensor 5910; 5920 on the second nitrogen supply line.

The second nitrogen supply valve 5610; 5620 is opened in response to a signal indicating the need for nitrogen supply into the engine unit. That is, the second nitrogen supply valve 5610; 5620 is normally kept closed and is opened upon purging of the engine unit.

The second backflow prevention valve 5710; 5720 prevents backflow of the fuel gas at a joint between the second nitrogen supply line and the engine unit 1000, and may be configured as a check valve.

That is, backflow of the fuel gas from the engine unit 1000 can be preemptively prevented by the second nitrogen supply valve 5610; 5620 and the second backflow prevention valve 5710; 5720.

The first pressure sensor 5810; 5820 is disposed upstream of the second nitrogen supply valve 5610; 5620 to detect whether the pressure of nitrogen gas through the second nitrogen supply line is normal.

The second pressure sensor 5910; 5920 is disposed between the second nitrogen supply valve 5610; 5620 and the second backflow prevention valve 5710; 5720 to detect pressure rise in the event of backflow of the fuel gas from the engine unit 1000.

The nitrogen supply system for dual fuel engines according to the present invention further includes a controller 7000. The controller 7000 may control operation of the system and purging of the engine unit through control of opening/closing of the valves in the system based on the pressure measured by the pressure sensors.

Next, with reference to the above-described nitrogen supply system for dual fuel engines, a method of controlling the nitrogen supply system for dual fuel engines according to the present invention will be described.

The nitrogen supply system control method includes: controlling supply of fuel gas from the fuel gas supply system 4000 to the engine unit 1000; and controlling opening/closing of the nitrogen supply regulation unit in conjunction with supply of the fuel gas.

The step of controlling supply of fuel gas includes: supplying the fuel gas from the fuel gas supply system 4000 to the engine unit 1000 when the engine unit 1000 is in a normal gas operation mode; and shutting off supply of the fuel gas when the normal gas operation mode is stopped.

Specifically, when the engine unit 1000 is in the normal gas operation mode, the fuel gas is supplied to the low-pressure gas valve unit 2200 through the main fuel gas line connected to the fuel gas supply system 4000 and then supplied from the low-pressure gas valve unit 2200 to the first engine 1100 and the second engine 1200 through the first fuel supply line L1 and the second fuel supply line L2, respectively, and, when the normal gas operation mode is stopped, supply of the fuel gas is shut off.

Herein, "normal gas operation" refers to operation in gas mode in which vaporized LNG is supplied as fuel for the first engine 1100 and the second engine 1200 of the engine unit 1000.

The step of controlling opening/closing of the backflow prevention valve set 5000 includes the steps of: opening the backflow prevention valve set 5000; and closing the backflow prevention valve set 5000.

The step of opening the backflow prevention valve set 5000 includes supplying nitrogen gas by opening the backflow prevention valve set 5000 during supply of the fuel gas, wherein control is performed with respect to the backflow prevention valve set 5000 such that the first nitrogen shutoff valve 5100, the second nitrogen shutoff valve 5200, and the first nitrogen supply valve 5300 are opened and the second nitrogen supply valve 5610; 5620 and the second backflow prevention valve 5710; 5720 are closed.

That is, in this step, the engine unit 1000 operates in the gas mode using the fuel gas and the nitrogen gas is maintained in a pressurized state up to an upstream end of the engine unit 1000.

With this configuration, it is possible to ensure fast response in the event of emergency. That is, the engine unit can be rapidly purged and, in the event of backflow of the fuel gas, leaked gas can be rapidly vented.

The step of opening the backflow prevention valve set 5000 further includes a pressure measurement step, wherein the pressure measurement step is performed by the first pressure sensor 5810; 5820 and the second pressure sensor 5910; 5920.

If a pressure measured by the first pressure sensor 5810; 5820 drops to a predetermined value or less, this indicates that there is a possibility of backflow of the fuel gas from the engine unit 1000. Accordingly, supply of the fuel gas is shut off to stop gas mode operation of the engine unit 1000, followed by emergency purging of the engine unit with purge air.

If pressure rise is detected by the second pressure sensor 5910; 5920, this indicates that there is backflow of the fuel gas from the engine unit 1000. Accordingly, supply of the fuel gas is shut off to stop gas mode operation of the engine unit 1000, followed by emergency purging of the engine unit with purge air.

Specifically, the first nitrogen shutoff valve 5100 and the second nitrogen shutoff valve 5200 of the backflow prevention valve set 5000 are closed and the first backflow prevention valve 5500 and the second nitrogen supply valve 5610; 5620 of the backflow prevention valve set 5000 are opened such that the fuel gas is discharged to a safe area through the ventilation unit.

The step of opening the backflow prevention valve set 5000 further includes a purging step in which supply of the fuel gas is shut off, followed by purging with nitrogen.

The purging step is a normal purging process in which gas mode operation of the engine unit 1000 is stopped, followed by purging the engine unit 1000 with nitrogen. In the purging step, the engine unit 1000 can be rapidly purged using nitrogen gas in the pressurized state.

Specifically, the purging step may be performed in three ways, which may be selected depending on which section is to be purged.

First, the purging step may be performed by opening the second nitrogen supply valve 5610; 5620 and the engine purge valve 2216; 2226 and closing the first shutoff valve 2212; 2222 and the second shutoff valve 2213; 2223 such that the fuel gas in the engine unit 1000 and the fuel supply line L1; L2 is discharged to a safe area by nitrogen supplied to the engine unit 1000.

Second, the purging step may be performed by opening the second nitrogen supply valve 5610; 5620, the engine purge valve 2216; 2226 and the second shutoff valve 2213; 2223, and closing the first shutoff valve 2212; 2222. Here, when the second shutoff valve 2213; 2223 is opened, the second pipe purge valve 315; 325 may also be opened.

That is, the purging step may be performed by controlling opening/closing of the second shutoff valve 2213; 2223, the second pipe purge valve 315; 325, and the engine purge valve 2216; 2226 depending on the section to be purged with the first shutoff valve 312; 322 always closed.

Third, the purging step may be performed through manual purging. Here, it is desirable that manual purging be performed when the engine unit 1000 is not operating in the gas mode for a long period of time or when the engine unit 1000 is in need of maintenance.

Specifically, the nitrogen supply system may further include a nitrogen supply line (not shown) downstream of the master gas valve, wherein the nitrogen supply line (not shown) is connected to each of the first low-pressure gas unit 2210 and the second low-pressure gas unit 2220.

Upon manual purging, nitrogen is supplied to the nitrogen supply line (not shown), such that the fuel gas is discharged to an outside safe area through the first pipe purge valve 2214; 2224.

The step of closing the backflow prevention valve set 5000 includes shutting off nitrogen supply by closing the backflow prevention valve set 5000 when a pressure measured by the second pressure sensor 5910; 5920 is higher than a pressure measured by the first pressure sensor 5810; 5820 or when a pressure in the nitrogen buffer tank 3000 is less than or equal to 5 bar.

The step of closing the backflow prevention valve set 5000 is performed when the following conditions are simultaneously met:

First, the step of closing the backflow prevention valve set 5000 should be performed when the engine unit 1000 operates in the gas mode.

Second, the step of closing the backflow prevention valve set 5000 should be performed when both the first shutoff valve 2212; 2222 and the second shutoff valve 2213; 2223 of the low-pressure gas valve unit 2200 are opened.

For example, there may be the case in which a leakage test or purging for initial operation is performed during gas mode operation of the engine unit 1000. In this case, the first shutoff valve 2212; 2222 and the second shutoff valve 2213, 2223 are not opened simultaneously.

Normal supply of the fuel gas is only possible when the first shutoff valve 2212, 2222 and the second shutoff valve 2213, 2223 are simultaneously opened, and backflow of the fuel gas is only possible when the fuel gas is normally supplied to the engine unit 1000. Accordingly, the step of closing the backflow prevention valve set 5000 is performed when the first shutoff valve 2212, 2222 and the second shutoff valve 2213, 2223 are simultaneously opened.

Third, the step of closing the backflow prevention valve set 5000 should be performed in consideration of the time required for preparation of the fuel gas after the backflow prevention valve set 5000 is opened.

In this way, one backflow prevention valve set 500 can be used for multiples engines. When there is backflow of the fuel gas from one engine, the backflow prevention valve set 5000 is closed to stop gas mode operation of the engine unit 1000 and the master gas valve is closed.

Here, if no leaks are detected by the second pressure sensor 5910; 5920 or if a pressure measured by the second pressure sensor 5910; 5920 is lower than a pressure measured by the first pressure sensor 5810; 5820, the engine unit 1000 may temporarily continue to operate in the gas mode.

According to the present invention, the gas purging system for ships supplies nitrogen gas directly to the engine unit 1000 such that residual gas in the engine system is purged from the engine unit 1000 to the low-pressure gas valve unit 2200, as opposed to a conventional gas purging system in which nitrogen gas is injected into a fuel supply line to purge the interior of the engine system.

According to the present invention, since nitrogen gas from the nitrogen buffer tank 3000 is directly to the engine unit 1000 and residual gas in the engine 100; 110 is discharged through the low-pressure gas valve unit 2200, there is no need to install a separate vent pipe within the engine room, thereby reducing the material quantity per yard as compared to a conventional gas purging system.

In addition, since piping through which residual gas is purged and discharged from the engine unit 1000 is placed in a gas valve unit room (GVU room), it is possible to significantly reduce the number of gas pipes placed in an engine room, thereby ensuring maximized safety.

There is a lot of electrical equipment, oil handling equipment, and ignition equipment, and the like in the engine room. Accordingly, maximized safety can be ensured by minimizing the number of gas pipes placed in the engine room as in the present invention.

The gas valve unit room (GVU room) is designed against potential gas leakage and is ventilated at a rate of 30 air changes per hour. Accordingly, utilizing the gas valve unit room to discharge residual gas from the engine system is beneficial in terms of effective ventilation.

According to the present invention, since purging is performed in a direction from the engine unit 100; 110 to the low pressure gas valve unit 2200 such that residual gas pushed out of the engine unit is discharged to the first fuel supply line L1 and the second fuel supply line L2, which are formed of a double-walled pipe, cost savings can be achieved though increase in utilization of existing equipment and elimination of the need for a separate double-walled pipe for discharge of the residual gas.

According to the present invention, since nitrogen gas is always maintained in a pressurized state, the engine unit can be rapidly purged and backflow of fuel gas from the engine unit can be prevented.

According to the present invention, in the event of backflow of fuel gas, the fuel gas can be prevented from flowing into the nitrogen buffer tank by promptly closing the nitrogen supply regulation unit and can be rapidly discharged to a safe area through the first backflow prevention valve 5500.

According to the present invention, since one backflow prevention valve set 5000 is used for multiple engines, it is possible to reduce the volume that the gas purging system backflow occupies in a ship.

Although some embodiments have been described herein, it should be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be defined by the appended claims rather than by the foregoing description and the claims and equivalents thereto. The accompanying claims and their equivalents are intended to cover such modifications and the like as would fall within the scope and spirit of the invention.

## Claims

1. A gas purging system for ships having an engine fueled by fuel gas, comprising:
a fuel supply line along which fuel gas is supplied to the engine;
a gas valve unit disposed on the fuel supply line to control a pressure of the fuel gas; and
a purge line along which nitrogen gas is supplied to the engine to purge an interior of the engine and an interior of the fuel supply line,
wherein the nitrogen gas is directly supplied to the engine along the purge line, purges the interior of the engine and the fuel supply line, and is discharged to outside atmosphere through the gas valve unit.

2. The gas purging system according to claim 1, further comprising:
a buffer tank storing nitrogen gas to be delivered to the purge line.

3. The gas purging system according to claim 2, wherein the gas valve unit is placed in an area classified as a gas hazardous zone.

4. The gas purging system according to claim 3, wherein the gas hazardous zone is periodically ventilated and is a gas valve unit room (GVU Room) or a cargo compressor room.

5. The gas purging system according to claim 4, wherein the gas valve unit is connected to a vent line along which residual gas pushed out of the engine by the nitrogen gas is discharged to outside atmosphere, the vent line being provided with a purge valve to open/close the vent line.

6. The gas purging system according to claim 3, wherein the purge line is provided with a backflow prevention valve set to prevent backflow of the fuel gas from the engine, the backflow prevention valve set being placed in the gas hazardous zone.

7. The gas purging system according to claim 6, wherein the backflow prevention valve set comprises:
a first shutoff valve, a second shutoff valve, and a check valve disposed sequentially from an upstream side of the purge line; and
a bleed valve disposed on a leaked gas discharge line branched off of the purge line between the first shutoff valve and the second shutoff valve to discharge leaked gas to outside atmosphere therethrough,
the first shutoff valve and the second shutoff valve being switchable between an open position and a closed position to double open or close an internal channel of the purge line,
the check valve permitting one-way flow of a fluid inside the purge line to prevent backflow of the fuel gas from the engine into the purge line, and
the bleed valve functioning to release residual pressure from the purge line between the first shutoff valve and the second shutoff valve when the first shutoff valve and the second shutoff valve are closed.

8. The gas purging system according to claim 7, wherein:
the first shutoff valve and the second shutoff valve are always switched to the same position with respect to each other; and
the bleed valve is always switched to an opposite position with respect to the first shutoff valve and the second shutoff valve.

9. The gas purging system according to claim 8, wherein the backflow prevention valve set further comprises:
an actuator opening/closing the first shutoff valve, the second shutoff valve, and the bleed valve;
a tubing line along which a working fluid is supplied to drive the actuator; and
a solenoid valve unit being a group of solenoid valves disposed on the tubing line,
the backflow prevention valve set being placed in the gas valve unit room,
the solenoid valve unit being placed in the engine room at a location proximate to a wall separating the engine room from the gas valve unit room, and
the tubing line extending from the engine room into the gas valve unit through the wall.

10. The gas purging system according to claim 6, wherein:
the engine comprises a high-pressure gas injection engine powered by fuel gas compressed to 10 bar or more and a low-pressure gas injection engine powered by fuel gas compressed to less than 10 bar;
the gas valve unit comprises a high-pressure gas valve unit supplying fuel gas to the high-pressure gas injection engine and a low-pressure gas valve unit supplying fuel gas to the low-pressure gas injection engine; and
the purge line comprises a purge line connected from the buffer tank to the high-pressure gas injection engine and a purge line connected from the buffer tank to the low-pressure gas injection engine.

11. The gas purging system according to claim 10, wherein the backflow prevention valve set is disposed on each of the purge line connected to the high-pressure gas injection engine and the purge line connected to the low-pressure gas injection engine.

12. The gas purging system according to claim 11, wherein:
the high-pressure gas valve unit is placed in the cargo compressor room; and
the low-pressure gas valve unit and the backflow prevention valve set are placed in the gas valve unit room.

13. A gas purging system for ships having an engine fueled by fuel gas, comprising:
a storage tank storing fuel gas used as fuel for the engine in a liquefied state;
a fuel supply line along which the fuel gas is supplied from the storage tank to the engine;
a gas valve unit disposed on the fuel supply line to control a pressure of the fuel gas;
a buffer tank storing an inert gas used to purge the engine; and
a purge line connected from the buffer tank to the engine,
wherein, during operation of the engine using the fuel gas, liquefied gas stored in the buffer tank is supplied to the engine along the fuel supply line and, upon purging of the engine, the inert gas stored in the buffer tank is supplied to the engine to push residual gas out of the engine and the residual gas pushed out of the engine by the inert gas is discharged to the fuel supply line to be vented to a safe area through the gas valve unit disposed on the fuel supply line.

14. The gas purging system according to claim 13, wherein a direction in which the fuel gas is supplied from the storage tank to the engine is reversed with respect to a direction in which the residual gas is discharged upon purging of the engine.

15. A backflow prevention valve set for a gas purging system disposed on a purge line along which an inert gas is supplied to purge a gas pipe, the backflow prevention valve set comprising:
a single body;
a first channel formed inside the single body and providing a passage for the inert gas to enter and exit the single body;
a second channel branched off of the first channel between the first shutoff valve and the second shutoff valve to discharge leaked gas therethrough;
a first shutoff valve and a second shutoff valve disposed sequentially from an upstream side of the first channel to double open or close the first channel;
a check valve disposed in the first channel downstream of the second shutoff valve to permit one-way flow of the inert gas in the first channel; and
a bleed valve disposed in the second channel to release residual pressure from the first channel between the first shutoff valve and the second shutoff valve when the first shutoff valve and the second shutoff valve are closed,
wherein the first shutoff valve, the second shutoff valve, the check valve, and the bleed valve are integrated into a single valve assembly through the single body.

16. The backflow prevention valve set according to claim 15, wherein the single body is formed with an inert gas inlet through which the inert gas enters the first channel, an inert gas outlet through which the inert gas exits the first channel, and a leakage gas outlet through which leaked gas exits the second channel.

17. The backflow prevention valve set according to claim 16, further comprising:
a filter disposed on a most upstream side of the first channel to filter out foreign matter contained in the inert gas; and
a pressure sensor disposed in the first channel between the filter and the first shutoff valve to measure a pressure of the inert gas at the corresponding location.

18. The backflow prevention valve set according to claim 16, wherein:
the first shutoff valve, the second shutoff valve, and the bleed valve are switchable between an open position and a closed position;
the first shutoff valve and the second shutoff valve are always switched to the same position with respect to each other; and
the bleed valve is always switched to an opposite position with respect to the first shutoff valve and the second shutoff valve.

19. The backflow prevention valve set according to claim 18, wherein the check valve is configured as a closable check valve to be shut off for maintenance work.

20. The backflow prevention valve set according to claim 19, further comprising:
a sub-check valve disposed in the first channel between the first shutoff valve and a point at which the second channel is branched off of the first channel to permit one-way flow of the inert gas in the first channel.

21. The backflow prevention valve set according to claim 20, wherein the sub-check valve is configured as a closable check valve to be shut off for maintenance work.

22. A gas purging system for ships having an engine fueled by fuel gas, comprising:
a purge line along which an inert gas is supplied to the engine to purge an interior of the engine; and
a backflow prevention valve set disposed on the purge line to prevent fuel gas from flowing back from the engine,
wherein the backflow prevention valve set is configured as a valve assembly comprising:
a first shutoff valve and a second shutoff valve disposed sequentially from an upstream side of the purge line to double open or close an internal channel of the purge line;
a check valve disposed on the purge line downstream of the second shutoff valve; and
a bleed valve disposed on a leaked gas discharge line branched off of the purge line between the first shutoff valve and the second shutoff valve to discharge a gas leaked from the second shutoff valve therethrough.

23. The gas purging system according to claim 22, further comprising:
an orifice disposed on the purge line downstream of the backflow prevention valve set; and
a differential pressure transmitter measuring a differential pressure across the orifice,
wherein, when the differential pressure across the orifice is greater than or equal to a predetermined value, an alarm is triggered to trip the engine or change fuel for the engine from the fuel gas to fuel oil based on determination that there is backflow from the engine into the purge line.

24. A gas purging system for ships, comprising:
a high-pressure gas injection engine powered by liquefied gas;
a low-pressure gas injection engine powered by liquefied gas at a lower pressure than that supplied to the high-pressure gas injection engine;
a first fuel supply line along which liquefied gas stored in a liquefied gas storage tank is supplied to the high-pressure gas injection engine, the liquefied gas being compressed and vaporized while passing through the first fuel supply line;
a second fuel supply line along which liquefied gas stored in the liquefied gas storage tank is supplied to the low-pressure gas injection engine, the liquefied gas being compressed and vaporized while passing through the second fuel supply line;
a first purge line along which an inert gas is supplied to the high-pressure gas injection engine to purge an interior of the high-pressure gas injection engine and the first fuel supply line; and
a second purge line along which an inert gas is supplied to the low-pressure gas injection engine to purge an interior of the low-pressure gas injection engine and the second fuel supply line,
wherein the inert gas is directly supplied to the high-pressure gas injection engine and the low-pressure gas injection engine along the first purge line and the second purge line, respectively, and
purging of the high-pressure gas injection engine is performed in a direction from the interior of the high-pressure gas injection engine to the first fuel supply line and purging of the low-pressure gas injection engine is performed in a direction from the interior of the low-pressure gas injection engine to the second fuel supply line.

25. The gas purging system according to claim 24, wherein:
residual gas pushed out of the high-pressure gas injection engine by the inert gas supplied to the high-pressure gas injection engine along the first purge line is vented to outside atmosphere through a high-pressure gas valve unit disposed on the first fuel supply line; and
residual gas pushed out of the low-pressure gas injection engine by the inert gas supplied to the low-pressure gas injection engine along the second purge line is vented to outside atmosphere through a low-pressure gas valve unit disposed on the second fuel supply line.

26. The gas purging system according to claim 25, wherein:
the high-pressure gas valve unit serves to control the pressure and flow rate of fuel gas supplied to the high-pressure gas injection engine and is placed in a cargo compressor room or a gas valve unit room (GVU Room) classified as a gas hazardous zone; and
the low-pressure gas valve unit serves to control the pressure and flow rate of fuel gas supplied to the low-pressure gas injection engine and is placed in the gas valve unit room.

27. The gas purging system according to claim 26, wherein:
a section of the first fuel supply line extending from the cargo compressor room or gas valve unit room having the high-pressure gas valve unit placed therein to the high-pressure gas injection engine is formed of a double-walled pipe; and
a section of the second fuel supply line extending from the gas valve unit room having the low-pressure gas valve unit placed therein to the low-pressure gas injection engine is formed of a double-walled pipe.

28. The gas purging system according to claim 25, further comprising:
a first backflow prevention valve set disposed on the first purge line to prevent fuel gas from flowing back from the high-pressure gas injection engine; and
a second backflow prevention valve set disposed on the second purge line to prevent fuel gas from flowing back from the low-pressure gas injection engine.

29. The gas purging system according to claim 28, further comprising:
a third purge line branched off of the first purge line downstream of the first backflow prevention valve set and connected to the second fuel supply line,
wherein the second fuel supply line is provided with a master valve controlling fuel gas supply to the low-pressure gas injection engine, and
an inert gas supplied along the third purge line purges an interior of the second fuel supply line extending from downstream of the master valve to a point at which the low-pressure gas valve unit is disposed.

30. The gas purging system according to claim 28, wherein the first backflow prevention valve set comprises:
a first channel defining a passage for an inert gas to flow through;
a first shutoff valve and a second shutoff valve disposed sequentially in the first channel to open/close the first channel;
a check valve disposed in the first channel downstream of the second shutoff valve;
a second channel branched off of the first channel between the first shutoff valve and the second shutoff valve to discharge leaked gas therethrough; and
a bleed valve disposed in the second channel.

31. The gas purging system according to claim 30, wherein, during gas mode operation of the high-pressure gas injection engine, the first shutoff valve and the second shutoff valve are closed and the bleed valve is opened and, upon purging of the high-pressure gas injection engine, the first shutoff valve and the second shutoff valve are opened and the bleed valve is closed.

32. The gas purging system according to claim 28, further comprising:
a nitrogen supply valve and a check valve disposed sequentially on the second purge line between the second backflow prevention valve set and the low-pressure gas injection engine.

33. The gas purging system according to claim 32, wherein, during gas mode operation of the low-pressure gas injection engine, the second backflow prevention valve set is controlled to open the second purge line such that the second purge line is pressurized to a required inert gas supply pressure up to a point at which the nitrogen supply valve is disposed.

34. The gas purging system according to claim 33, further comprising:
a first pressure sensor disposed upstream of the nitrogen supply valve,
wherein, when an inert gas supply pressure measured by the first pressure sensor drops to a predetermined value or less, gas mode operation of the low-pressure gas injection engine is stopped.

35. The gas purging system according to claim 33, further comprising:
a second pressure sensor disposed between the nitrogen supply valve and the check valve,
wherein, when the second pressure sensor detects pressure rise in the event of backflow from the low-pressure gas injection engine, gas mode operation of the low-pressure gas injection engine is stopped.

36. The gas purging system according to claim 35, wherein the second backflow prevention valve set comprises:
a first channel defining a passage for an inert gas to flow through;
a first shutoff valve and a second shutoff valve disposed sequentially in the first channel to open/close the first channel;
a check valve disposed in the first channel downstream of the second shutoff valve;
a second channel branched off of the first channel between the first shutoff valve and the second shutoff valve to discharge leaked gas therethrough; and
a bleed valve disposed in the second channel.

37. The gas purging system according to claim 36, wherein, during gas mode operation of the low-pressure gas injection engine, the first shutoff valve and the second shutoff valve are opened and the nitrogen supply valve and the bleed valve are closed and, when gas mode operation of the low-pressure gas injection engine is stopped, the first shutoff valve and the second shutoff valve are closed and the bleed valve is opened.

38. The gas purging system according to claim 37, wherein, upon purging of the low-pressure gas injection engine, the first shutoff valve, the second shutoff valve, and the nitrogen supply valve are opened and the bleed valve is closed.

39. The gas purging system according to claim 31 or 38, further comprising:
at least one actuator controlling opening/closing of the first shutoff valve, the second shutoff valve, and the bleed valve;
a solenoid valve group supplying a working fluid to drive the actuator;
a tubing line along which the working fluid is supplied from the solenoid valve group to the actuator; and
a solenoid valve disposed on the tubing line to control a pressure of the working fluid.

40. The gas purging system according to claim 39, wherein the tubing line is provided in number corresponding to the number of actuators and the solenoid valve is single in number and is disposed on a common line from which a plurality of tubing lines extends.

41. The gas purging system according to claim 40, wherein the first shutoff valve, the second shutoff valve, the check valve, the bleed valve, and the solenoid valve are incorporated into one body to be manufactured as a single assembly.

42. A nitrogen supply system for dual fuel engines, comprising:
an engine unit capable of operating on fuel gas and configured as an engine for propulsion of a ship;
a fuel supply system supplying the fuel gas depending on a condition of the engine unit;
a low-pressure gas valve unit controlling the pressure and flow rate of the fuel gas supplied to the engine unit;
a nitrogen supply unit supplying nitrogen gas to purge an interior of the engine unit; and
a ventilation unit discharging residual gas in the engine unit to a safe area in conjunction with of supply of nitrogen.

43. The nitrogen supply system according to claim 42, wherein the fuel supply system and the engine unit are connected to each other via a main fuel supply line, the main fuel supply line being branched into a first fuel supply line and a second fuel supply line within a gas valve unit room.

44. The nitrogen supply system according to claim 43, wherein the low-pressure gas valve unit is disposed on the main fuel supply line and comprises a first low-pressure gas valve unit disposed on the first fuel supply line and a second low-pressure gas valve unit disposed on the second fuel supply line, the first low pressure gas valve unit and the second low-pressure gas valve unit being placed in the gas valve unit room.

45. The nitrogen supply system according to claim 42, wherein the low-pressure gas valve unit comprises a first pipe purge valve, a second pipe purge valve, an engine purge valve, a pressure regulating valve, a first shutoff valve, and a second shutoff valve, wherein the first pipe purge valve is disposed between the pressure regulating valve and the first shutoff valve, the second pipe purge valve is disposed between the first shutoff valve and the second shutoff valve, and the engine purge valve is disposed downstream of the second shutoff valve.

46. The nitrogen supply system according to claim 42, wherein the nitrogen supply unit comprises a nitrogen supply regulation unit regulating nitrogen supply to the engine unit, wherein the nitrogen supply regulation unit is connected to the nitrogen supply unit via a first nitrogen supply line and is placed in a gas valve unit room (GVU room) and the engine unit is connected to the nitrogen supply regulation unit via a second nitrogen supply line.

47. The nitrogen supply system according to claim 46, wherein the nitrogen supply regulation unit comprises:
a first nitrogen shutoff valve and a second nitrogen shutoff valve shutting off nitrogen supply upon detection of leakage in the second nitrogen supply line;
a first nitrogen supply valve regulating nitrogen supply to the engine unit; and
a first backflow prevention valve discharging the fuel gas to an outside and preventing backflow of the fuel gas into the second nitrogen supply line.

48. The nitrogen supply system according to claim 46, wherein the engine unit comprises:
a second nitrogen supply valve disposed on the second nitrogen supply line and switched to an open position in response to a signal indicating a need for nitrogen supply into the engine unit;
a first pressure sensor disposed upstream of the second nitrogen supply valve;
a second backflow prevention valve preventing backflow of the fuel gas into the second nitrogen supply line; and
a second pressure sensor disposed between the second nitrogen supply valve and the second backflow prevention valve.

49. A method of controlling a nitrogen supply system for dual fuel engines, comprising the steps of:
controlling supply of fuel gas from a fuel gas supply system to an engine unit; and
controlling opening/closing of a nitrogen supply regulation unit in conjunction with supply of the fuel gas,
wherein the step of controlling opening/closing of a nitrogen supply regulation unit comprises the steps of: opening the nitrogen supply regulation unit; and closing the nitrogen supply regulation unit.

50. The nitrogen supply system control method according to claim 49, wherein the step of opening the nitrogen supply regulation unit comprises:
supplying the fuel gas and nitrogen gas by opening a first nitrogen shutoff valve, a second nitrogen shutoff valve and a first nitrogen supply valve of the nitrogen supply regulation unit, and closing a first backflow prevention valve and a second nitrogen supply valve of the nitrogen supply regulation unit.

51. The nitrogen supply system control method according to claim 50,
wherein the step of opening the nitrogen supply regulation unit further comprises: a pressure measurement step, and
wherein, when a second pressure sensor detects pressure rise, supply of the fuel gas is shut off based on determination that there is backflow of the fuel gas, and the fuel gas is discharged to a safe area by closing the first nitrogen shutoff valve and the second nitrogen shutoff valve and opening the first backflow prevention valve and the second nitrogen supply valve.

52. The nitrogen supply system control method according to claim 49, wherein the step of opening the nitrogen supply regulation unit further comprises: a nitrogen purging step in which supply of the fuel gas is shut off, followed by nitrogen purging, the nitrogen purging step comprising purging the engine unit, a first fuel supply line, and a second fuel supply line by opening a second nitrogen supply valve, a second shutoff valve and an engine purge valve, and closing a first shutoff valve.

53. The nitrogen supply system control method according to claim 52, wherein the nitrogen purging step further comprises purging the engine unit, the first fuel supply line, and the second fuel supply line by opening the second nitrogen supply valve, the second shutoff valve, a first pipe purge valve and a second pipe purge valve, and closing a first shutoff valve and the engine purge valve.

54. The nitrogen supply system control method according to claim 49, wherein the step of closing the nitrogen supply regulation unit comprises shutting off nitrogen supply by closing the nitrogen supply regulation unit when a pressure measured by a second pressure sensor is higher than a pressure measured by a first pressure sensor or when a pressure of a nitrogen supply unit is less than or equal to 5 bar.
